(19)

Europäisches Patentamt

European Patent Office

Office européen des brevets

(11) **EP 3 928 993 A1**

(12) **EUROPEAN PATENT APPLICATION**

(43) Date of publication:
**29.12.2021  Bulletin 2021/52**

(21) Application number: **21180531.2**

(22) Date of filing: **21.06.2021**

(51) Int Cl.:
**B41J 2/475** (2006.01)  **B41J 3/407** (2006.01)
**B41J 2/44** (2006.01)  **B41J 2/447** (2006.01)
**B41J 2/45** (2006.01)  **B41J 2/47** (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **26.06.2020   JP 2020110805**
**26.06.2020   JP 2020110806**

(71) Applicant: **Ricoh Company, Ltd.**
**Tokyo 143-8555 (JP)**

(72) Inventors:
• **TAMURA, Asato**
**Tokyo (JP)**

• **HIRAYAMA, Rie**
**Tokyo (JP)**
• **KOBASHIGAWA, Shohta**
**Tokyo (JP)**
• **TACHIBANA, Hiroto**
**Tokyo (JP)**
• **NAKAYAMA, Hirotoshi**
**Tokyo (JP)**
• **ICHIKAWA, Yoichi**
**Tokyo (JP)**

(74) Representative: **SSM Sandmair**
**Patentanwälte Rechtsanwalt**
**Partnerschaft mbB**
**Joseph-Wild-Straße 20**
**81829 München (DE)**

(54) **DEVICE FOR APPLYING ENERGY TO A SUBSTRATE**

(57)    A device (1) for applying at least a first energy to a substrate includes a conversion material application unit (11) configured to apply a conversion material for converting a second energy to the first energy to the substrate and an energy application unit (13) configured to apply the second energy to the conversion material applied to the substrate, wherein the second energy corresponds to an amount of heat not less than heat of evaporation of the conversion material.

FIG. 1

EP 3 928 993 A1

**Description**

BACKGROUND

Technical Field

The present invention relates to a device.

Description of the Related Art

Technology of processing a substrate and forming images on a substrate by applying light energy to the substrate has been used.

A configuration for applying a conversion material to a substrate for converting a second energy such as light energy to a first energy such as heat energy and exposing the applied conversion material to laser beams for applying heat energy to the substrate via the conversion material has been proposed in Japanese Unexamined Patent Application Publication No. 2008-155232.

However, this configuration is required to remove the conversion material if the material remains on the substrate after the conversion material applied to the substrate is exposed to laser beams; it may take a time to apply energy by adding the removing process.

SUMMARY

According to embodiments of the present disclosure, an improved device is provided which is capable of applying energy to a substrate in a short period of time.

According to embodiments of the present disclosure, provided is a device (1) for applying at least a first energy to a substrate which includes a conversion material application unit (11) configured to apply a conversion material for converting a second energy to the first energy to the substrate and an energy application unit (13) configured to apply the second energy to the conversion material applied to the substrate, wherein the second energy corresponds to an amount of heat not less than heat of evaporation of the conversion material.

BRIEF DESCRIPTION OF THE SEVERAL VIEWS OF THE DRAWINGS

Various other objects, features and attendant advantages of the present invention will be more fully appreciated as the same becomes better understood from the detailed description when considered in connection with the accompanying drawings in which like reference characters designate like corresponding parts throughout and wherein:

FIG. 1 is a diagram illustrating an example of an image forming device relating to the first embodiment of the present disclosure;

FIG. 2 is a diagram illustrating an image forming mechanism by the image forming device according to an embodiment of the present disclosure;

FIG. 3 is a diagram illustrating an example of the configuration of the ink discharging head relating to the first embodiment;

FIG. 4 is a diagram illustrating an example of the configuration of the exposing unit relating to the first embodiment;

FIG. 5 is a block diagram illustrating an example of the configuration of the function of the control unit relating to the first embodiment illustrated in FIG. 1;

FIGS. 6A and 6B are diagrams illustrating examples of the emission of the pulse laser beams to ink droplets and respectively represent a first example and a second example;

FIG. 7 is a flow chart illustrating an example of processing of image forming by the control unit relating to the first embodiment;

FIG. 8 is a diagram illustrating an example of the results of image forming;

FIG. 9 is a diagram illustrating a variation of the configuration of the ink discharging head;

FIG. 10 is a diagram illustrating the exposing unit relating to the variation;

FIG. 11 is a diagram illustrating the configuration of an image forming device according to the second embodiment;

FIG. 12 is a diagram illustrating a block diagram illustrating an example of the whole configuration of the image forming device according to an embodiment of the present disclosure;

FIG. 13 is a diagram illustrating an example of the image forming process by the image forming device according to an embodiment of the present disclosure;

FIG. 14A is a front diagram illustrating an example of the configuration of the image forming unit according to a third embodiment of the present disclosure and FIG. 14B is a cross sectional diagram of FIG. 14A along the A-A' line;

FIG. 15 is a block diagram illustrating an example of the configuration of the function according to the third embodiment;

FIGS. 16A and 16B are respectively a perspective view and a side view illustrating an example of the behavior of jetting of ink;

FIG. 17 is a diagram illustrating a perspective view illustrating the behavior of an exposing unit;

FIG. 18 is a diagram illustrating the behavior of a removing unit;

FIG. 19 is a diagram illustrating a first variation of the configuration of a conversion material application unit;

FIG. 20 is a diagram illustrating a second variation of the configuration of a conversion material application unit; and

FIG. 21A is respectively a front diagram illustrating an example of the configuration of the image forming unit according to a fourth embodiment of the present disclosure and FIG. 21B is a cross sectional diagram of FIG. 21A along the B-B' line.

The accompanying drawings are intended to depict example embodiments of the present invention and should not be interpreted to limit the scope thereof. The accompanying drawings are not to be considered as drawn to scale unless explicitly noted. Also, identical or similar reference numerals designate identical or similar components throughout the several views.

DESCRIPTION OF THE EMBODIMENTS

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

As used herein, the singular forms "a", "an", and "the" are intended to include the plural forms as well, unless the context clearly indicates otherwise.

Moreover, image forming, recording, printing, modeling, etc., in the present disclosure represent the same meaning, unless otherwise specified.

Embodiments of the present invention are described in detail below with reference to accompanying drawing(s). In describing embodiments illustrated in the drawing(s), specific terminology is employed for the sake of clarity. However, the disclosure of this patent specification is not intended to be limited to the specific terminology so selected, and it is to be understood that each specific element includes all technical equivalents that have a similar function, operate in a similar manner, and achieve a similar result.

For the sake of simplicity, the same reference number will be given to identical constituent elements such as parts and materials having the same functions and redundant descriptions thereof omitted unless otherwise stated.

Embodiments of the present disclosure are described with reference to the accompanying drawings. In each drawing, the same components are denoted by the same reference numerals (symbols) and redundant descriptions are appropriately omitted. The embodiments described below are for specifying the technology of the present disclosure just for illustration and are not limiting the present disclosure. The dimensions, materials, forms, and relative dispositions of the components described below are not for limiting the scope of the present disclosure and for illustration only unless otherwise specified. The size and the positional relationships of the members illustrated in drawings are occasionally exaggerated for clarification.

The device relating to the embodiments of the present disclosure at least applies a first energy to a substrate and includes a conversion material application unit for applying a conversion material for converting a second energy to the first energy and an energy application unit for applying the second energy to the conversion material that has been applied to the substrate.

In the present embodiment, it is possible to apply energy to the substrate in a short period of time by applying the second energy corresponding to the heat energy of the heat of evaporation of the conversion material or greater, which obviates the need for removing the conversion material remaining on the substrate.

The first energy is, for example, heat energy and the second energy is, for example, light energy of laser beams. The conversion material is colored ink capable of absorbing laser beams.

Ink applied to a substrate as a conversion material absorbs light energy and produces heat upon an application of laser beams. At least one of the surface and the inside of the substrate is modified owing to the heat energy produced by the ink; this modification makes it possible to process the surface or the inside of the substrate to achieve a desired state or property or form a desired pattern such as images on at least one of the surface and the inside of the substrate.

"Energy" means ability to do work. "Heat of evaporation" means heat required for changing liquid or solid into air. Heat for changing liquid into air and heat for changing solid into air are respectively referred to as heat of vaporization and heat of sublimation in some cases. In the present embodiment, heat for changing liquid into air and heat for changing solid into air are both called as heat of evaporation.

"Modified" means a change of state or property of a substance. The first energy is applied to at least one of the surface and inside of a substrate to achieve modification by melting, evaporation, crystallization, or foaming. "Substrate" means the material portion of a target to which energy is applied by a device. The surface of a substrate touches air outside of the material and the inside of the substrate means the inside of the material constituting the substrate. In some embodiments, a planar substrate has a front surface and a rear surface because the surface of a substrate is used as a term pairing with the inside of a substrate. In the case of a tubular substrate, the outer surface and the inner surface are both the surfaces of the substrate.

In the following embodiment, an image forming device is described which forms images on a substrate constituting a container. The container includes a polyethylene terephthalate (PET) bottle for accommodating a drink.

Images are directly formed on the substrate of a container. Such images include codes such as bar codes, shapes, and text representing information about the content including the name, the identification number, the manufacturer, and the manufacturing date.

In some cases, a recording medium like a label on which such information is displayed is attached to the surface of a container such as a PET bottle. In some embodiments, such information is shown by a pattern formed on the surface and/or the inside of the substrate constituting a container without using a recording medium.

First Embodiment

Example of Configuration of Image Forming Device

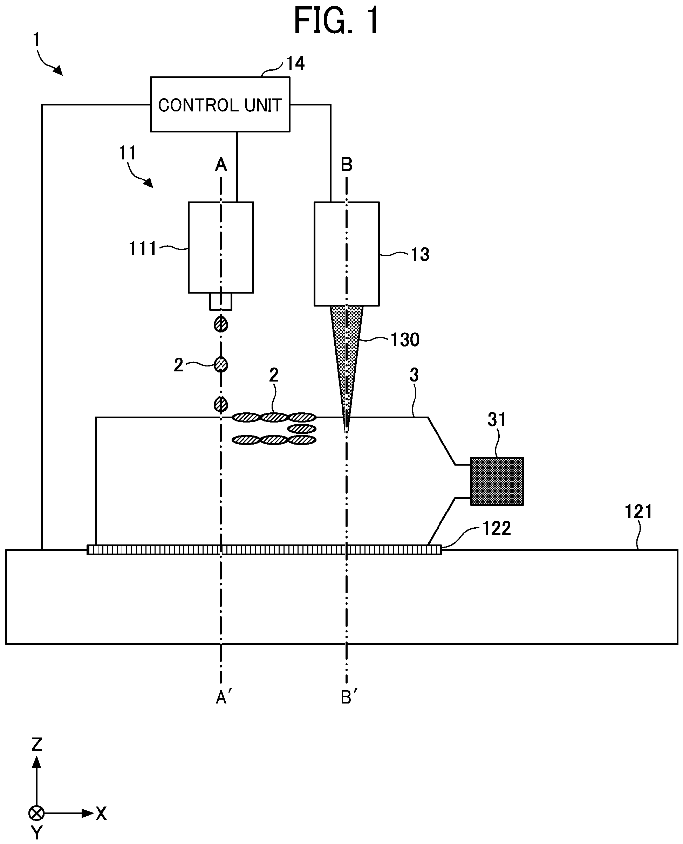

First, the entire configuration of an image forming device 1 is described with reference to FIG. 1. FIG. 1 is a diagram illustrating an example of the configuration of the image forming device 1. As illustrated in FIG. 1, the image forming device 1 includes an ink discharging head 111, a translation stage 121, an exposing unit (irradiator) 13, and a control unit 14. The image forming device 1 is an example of a device applying at least a first energy to a substrate.

The translation stage 121 has a translation table 122 and fixes a container 3 on the surface of the translation table 122 on the side of the appropriate Z axis direction. A driving unit such as a motor is connected to the translation stage 121. The translation stage 121 translates the translation table 122 along the X axis direction by the driving force of the driving unit to change the position of the container 3 relative along the X axis direction.

The container 3 has a base part and a neck part having a smaller cross sectional area than that of the base part and contains resins such as PET. The container 3 has a cap 31 thereon. The image forming device 1 forms an image on the container 3 as an example of the target object. The image forming device 1 can form images on the substrate constituting the container 3. The container as the target object is not limited to the form and the material of the container 3 but can be formed of any form and any material. The target object is not limited to a container but can be any object.

The ink discharging head 111 and the irradiator 13 are disposed in parallel along the X axis on the side of the appropriate Z axis direction. The ink discharging head 111 and the irradiator 13 are supported by a support. Any supporter can be used as long as it can support the ink discharging head 111 and the irradiator 13.

The ink discharging head 111 is an example of the discharging unit for discharging a conversion material and a part of a conversion material application unit 11 for applying a conversion material to the substrate. The conversion material application unit 11 can be constituted of the ink discharging head 111 alone and may include the ink discharging head 111 and a mechanism for moving the ink discharging head 111.

An ink droplet 2 is an example of the conversion material for converting light energy (second energy) to heat energy (first energy). The ink discharging head 111 discharges ink to attach the ink droplet 2 to the substrate constituting the container 3.

The irradiator 13 is an example of the energy application unit for applying light energy (second energy) to the conversion material applied to the substrate. The translation stage 121 conveys the container 3 where the ink droplet 2 is applied to the substrate by the ink discharging head 111 to the position where the irradiator 13 is disposed. The irradiator 13 emits pulse laser beams to the ink droplet 2 applied to the substrate constituting the container 3 after or during the conveyance of the container 3 to apply light energy to the ink droplet 2.

The ink droplet 2 applied to the substrate constituting the container 3 absorbs the pulse laser beams emitted from the irradiator 13 and produces heat. Owing to this generated heat energy, the substrate is modified; an image is formed on the substrate of the container 3.

If the substrate of the container 3 is made of a material that little absorbs the wavelength of pulse laser beams to be applied, it is not possible to sufficiently absorb light energy so that the substrate does not produce heat energy enough to surpass the threshold of the modification of the substrate and fail to modify the substrate.

In some embodiments, the ink applied to a substrate absorbs pulse laser beams and can produce a larger amount of heat than when the ink is not applied so that the substrate is modified. A material that little absorbs the wavelength of pulse laser beams means that the material has a high transparency to pulse laser beams.

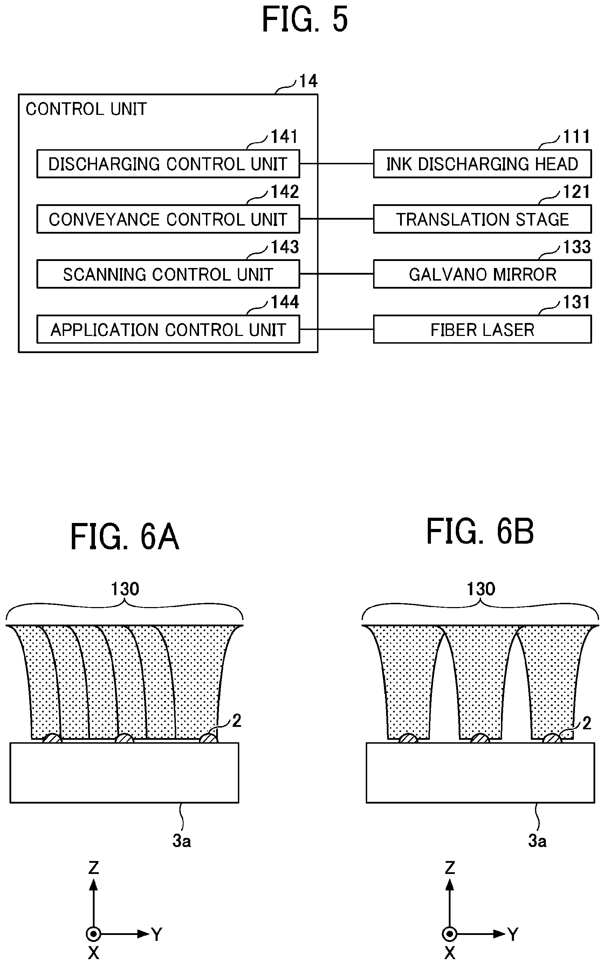

The control unit 14 controls the behavior of the ink discharging head 111, the translation stage 121, and the irradiator 13. The control unit 14 is configured by an electrical circuit and achieves functions described later with reference to FIG. 5. Part of the functions can be executed by software executed by central processing unit (CPU) and can be achieved by multiple circuits or multiple softwares. The control unit 14 can be arbitrarily positioned without particular limitation.

Image Forming Process by image Forming Device 1

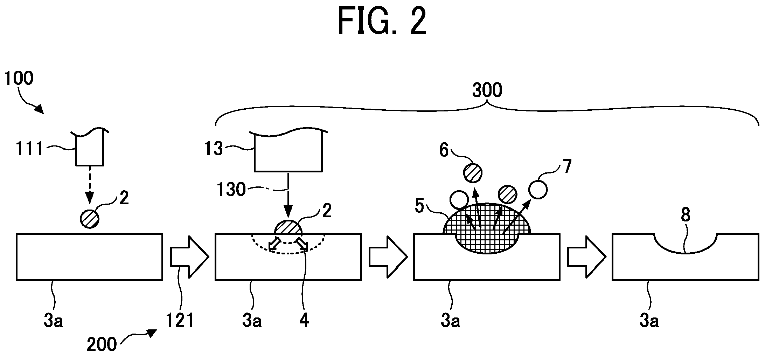

Next, the image forming process by the image forming device 1 is described with reference to FIG. 2. FIG. 2 is a diagram illustrating an example of the image forming process by the image forming device 1.

The image forming process by the image forming device 1 includes an application process 100, a conveyance process 200, and an irradiation process 300.

In the application process 100, the ink discharging head 111 discharges ink and the ink droplet 2 of the discharged ink reaches and is applied to a substrate 3a constituting a container.

In the conveyance process 200, the translation stage 121 conveys the substrate 3a. Conveyance means a behavior of moving and rotating a container constituted of the substrate 3a. The translation stage 121 conveys the substrate 3a to which the ink droplet 2 has been applied to the position where the irradiator 13 is disposed in the image forming device 1. In other words, the translation stage 121 conveys the substrate 3a to transition from the application process 100 to the irradiation process 300. In the conveyance process 200, the translation stage 121 conveys the substrate 3a in the entire image forming process in addition to the transition from the application process 100 to the irradiation process 300.

In the irradiation process 300, the irradiator 13 exposes the ink droplet 2 applied to the substrate 3a to pulse laser beams 130 to apply light energy to the ink. The ink droplet 2 exposed to the pulse laser beams 130 partially scatters as ink pieces 6, partially changes into evaporated particles 7 due to heat, and partially absorbs light energy and produces heat. The ink droplet 2 may be result in other forms. In the example illustrated in FIG. 2, a plume 5 having a plasma-like form is generated owing to the heat produced by the ink droplet 2.

A heat energy 4 as a result of the heat of the ink droplet 2a is transferred to the surface or the inside of the substrate 3a. The surface or the inside of the substrate 3a melts, evaporates, crystallizes, or foams owing to the transferred heat energy 4, which modifies the surface and/or the inside of the substrate 3a.

The irradiator 13 may execute the irradiation process 300 to the substrate 3a suspended after the conveyance process 200 or in conveyance while the conveyance process 200 is executed.

In the irradiation process 300, part of the ink droplet 2 does not evaporate or scatter but remains on or in the substrate 3a after the ink droplet 2 is exposed to the pulse laser beams 130 or the ink piece 6 scattered may return and adhere to the substrate 3a.

In some embodiments, the irradiator 13 applies light energy to the ink droplet 2 in an amount of the heat not less than the heat of evaporation of the ink to prevent the ink droplet 2 from remaining. The ink droplet 2 transfers the heat energy 4 produced by the heat attributable to the light energy to the surface or the inside of the substrate 3a and receives the amount of heat corresponding to the heat of evaporation or greater; all of the ink droplet 2 evaporates. Owing to this evaporation, a concave portion 8 is formed on or in the substrate 3a in accordance with melting, evaporation, crystallization, and foams owing to the heat energy 4 without the ink droplet 2 on or in the substrate 3a.

The image forming device 1 forms images as described above. The image forming device 1 independently and chromatically can conduct all the processes in such a manner that it completes the processes one by one. Alternatively, the image forming device 1 can two or more processes simultaneously. It also can execute all the processes without suspending the substrate 3a.

In the present embodiment, the irradiator 13 as an example of the energy application unit is configured to expose the ink droplet 2 applied to the substrate 3a to the pulse laser beams 130 but is not limited thereto. The energy application unit may apply microwave or radiation as the second energy to the ink droplet 2 applied to the substrate 3a.

Example of Configuration of Ink Discharging Head 111

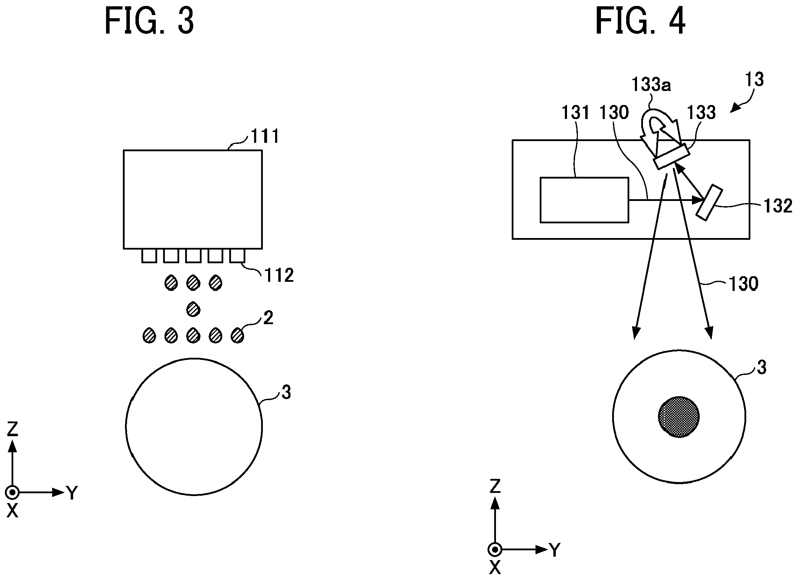

Next, the configuration of the ink discharging head 111 is described with reference to FIG 3. FIG. 3 is a diagram illustrating an example of the configuration of the ink discharging head 111. FIG. 3 is a diagram illustrating a cross section of the image forming device 1 cut along the line A-A' in FIG. 1 viewed from the X axis appropriate direction.

As illustrated in FIG. 3, the ink discharging head 111 has multiple nozzles 112 arranged in line along the X axis direction. The ink discharging head 111 discharges or jets ink from the nozzles 112. An item using a piezoelectric actuator (laminated piezoelectric element and thin-layered piezoelectric element), thermal actuators using a thermoelectric conversion element such as a heat element, or an electrostatic actuator including a diaphragm and a counter electrode is suitable as the energy generating source for discharging ink.

The ink discharging head 111 discharges the ink droplets 2 from the nozzles 112 to make the ink droplets 2 reach the substrate constituting the container 3 almost at the same time so that a linear pattern along the Y direction can be formed on the substrate. The ink droplet 2 can be applied to the substrate constituting the container 3 to form a desired two-dimensional pattern by forming a linear pattern along the Y axis direction by the ink discharging head 111 while conveying the container 3 along the X axis direction.

The ink discharging head 111 is not limited to the nozzles 112 arranged in line but may be configured to have a single nozzle. It is possible to form a linear pattern on a substrate constituting the container 3 by discharging the ink droplet 2 while moving the single nozzle along the Y axis direction.

The ink discharging head 111 may be an ink discharging unit as a collective form of parts relating to ink discharging in which a functional part and/or an assembly is integrated in an ink discharging head. For example, the ink discharging unit includes a combination of an ink discharging head and at least one of a head tank, a carriage, a supplying mechanism, a maintenance and recovery mechanism, and a main scanning moving mechanism.

The image forming device 1 may have a spray for spraying a conversion material instead of the ink discharging head 111. The spray means a device for spraying liquid in a fog or foam form by gas like high pressure air or using a mechanical device.

Example of Configuration of Irradiator 13

Next, the configuration of the irradiator 13 is described with reference to FIG. 4. FIG. 4 is a diagram illustrating an example of the configuration of the irradiator 13. FIG. 4 is a diagram illustrating a cross section of the image forming device 1 cut along the line B-B' in FIG. 1 viewed from the appropriate X axis direction.

As illustrated in FIG. 4, the irradiator 13 includes a fiber laser 131, a planar mirror 132, and a galvano mirror 133. The pulse laser beams 130 emitted from the fiber laser 131 is reflected at the planar mirror 132 to the side of the appropriate Z axis direction, scanned at the galvano mirror 133, and applied to the substrate constituting the container 3. Light energy (second energy) corresponding to the amount of heat of the heat of evaporation of the ink droplet 2 or greater is applied to the ink droplet 2 applied to the substrate by the pulse laser beams 130.

The fiber laser 131 is an example of the laser light source that emits laser beams. The fiber laser 131 is a solid laser using optical fiber as the amplifying medium. Fiber laser is a laser light source having a high energy conversion ratio in comparison with a solid laser using a laser crystal because it confines light in thin optical fiber.

The fiber laser 131 can emit the pulse laser beams 130 (laser beams in pulse) having a particular pulse width toward the planar mirror 132. The pulse width of the pulse laser beams 130 emitted from the fiber laser 131 is preferably 200 micro seconds or less.

The fiber laser 131 applies light energy to the ink droplet 2 by applying the pulse laser beams 130 to both of the region where the ink discharging head 111 has applied the ink droplet 2 to the substrate constituting the container 3 and the region where the ink discharging head 111 has not applied the ink droplet 2 to the substrate constituting the container 3.

The light energy applied to the ink droplet 2 by the fiber laser 131 is preliminarily set in such a manner that the heat energy obtained at the conversion by the ink surpasses the modification threshold of the substrate in the region where the ink droplet 2 is applied and does not surpass it in the region where the ink droplet 2 is not applied. The substrate constituting the container 3 is modified in the region where the ink droplet 2 has been applied upon an application of light energy and not modified in the region where the ink droplet 2 is not applied upon an application of light energy.

It is preferable to determine the light energy in accordance with the type of ink because the amount of the heat energy converted from the light energy varies according to the type such as color of ink.

The laser light source is not limited to the fiber laser 131 but can be any type of laser light sources. Laser light sources capable of oscillating pulses in the range of from pico to nano seconds are preferable. Solid laser includes YAG laser and titanium sapphire laser. Gas laser includes argon laser, helium neon laser, and carbon dioxide laser. Semiconductor laser is preferable because it is small. Fiber laser is the most suitable light source to achieve high peak energy and minimize the size.

The pulse laser beams 130 preferably has a wavelength of from 300 nm to 11 $\mu$m. It is particularly preferably from 700 to 1500 nm to modify a substrate with a sufficient peak energy. The ink droplet 2 preferably has an absorption ratio of 50 percent or more to the wavelength of from 700 to 1500 nm in accordance with this peak energy.

The planar mirror 132 is an optical element for reflecting the pulse laser beams 130 emitted from the fiber laser 131 toward the galvano mirror 133. The planar mirror 132 is not particularly limited and can be suitably selected to suit to a particular exterior form and size. It preferably contains gold, which has a high reflection ratio to the light of from 700 to 1500 nm.

The galvano mirror 133 is an example of the light scanning unit for scanning laser beams. The galvano mirror 133 is an optical device capable of moving the mirror at a high speed with a high precision and scanning or positioning the reflection light from the mirror.

The galvano mirror 133 reflects the pulse laser beams 130 reflected at the planar mirror 132 toward the container 3. The pulse laser beams 130 reflected at the galvano mirror 133 scans along the Y axis direction in accordance with the angle of the mirror included in the galvano mirror 133 changing in the direction toward an arrow 133a when the mirror swings. The substrate constituting the container 3 is exposed to this scanning light of the pulse laser beams 130. Light energy corresponding to the amount of heat corresponding to the heat of evaporation of the ink droplet 2 or greater is applied by the pulse laser beams 130 to the ink droplet 2 applied to the substrate.

Example of Functional Configuration of Control Unit 14

Next, the functional configuration of the control unit 14 is described with reference to FIG 5. FIG. 5 is a block diagram illustrating an example of the functional configuration of the control unit 14. As illustrated in FIG, 5, the control unit 14 includes a discharging control unit 141, a conveyance control unit 142, a scanning control unit 143, and an application control unit 144.

The discharging control unit 141 controls discharging or non-discharging and the timing of discharging of ink from each nozzle of the ink discharging head 111.

The conveyance control unit 142 controls driving of the translation stage 121 and the positioning, the conveyance direction, and the conveyance speed in the conveyance direction (i.e., X axis direction in FIG. 1) of a container placed on the table surface of the translation stage 121.

The scanning control unit 143 controls the driving (swing) of the galvano mirror 133, and the start and end of scanning, scanning speed, and scanning angle of the pulse laser beams by the galvano mirror 133. The scanning control unit 143 preliminarily determines the scanning speed (swing frequency) in accordance with the conveyance speed by the translation stage 121 and the scanning angle in accordance with the size of a container and initiates scanning of the pulse laser beams by the galvano mirror 133 on a particular timing. The galvano mirror 133 swings at a particular swing frequency and scans pulse laser beams. The scanning control unit 143 completes scanning by the galvano mirror 133 on a particular timing.

The application control unit 144 controls the timing of emitting pulse laser beams by the fiber laser 131. In the present embodiment, the fiber laser 131 applies pulse laser beams to both of the region where the ink discharging head 111 has applied ink droplets to the substrate constituting a container and the region where the ink discharging head 111 has not applied ink droplets to the substrate constituting a container. The application control unit 144 controls the fiber laser 131 to repeatedly emit pulse laser beams at a particular emission frequency.

For example, the emission frequency is preliminarily determined on a basis of the conveyance speed by the translation stage 121 in order that the application control unit 144 controls only to start and end the emission of pulse laser beams by the fiber laser 131.

FIG. 6 is a diagram illustrating an example of the state where the pulse laser beams 130 is applied to the ink droplet 2. FIG. 6A is a first example and FIG. 6B is a second example. FIG. 6 illustrates the substrate 3a to which the ink droplet 2 has been applied.

FIG. 6A is a diagram illustrating the state where the pulse laser beams 130 is applied to both of the region where the ink droplet 2 has been applied to the substrate 3a and the region where the ink droplet 2 has not been applied to the substrate 3a. The fiber laser 131 repeats emitting the pulse laser beams 130 at a particular emission frequency under the control by the application control unit 144 (FIG. 5). The galvano mirror 133 swings at a particular swing frequency and repeatedly scans the pulse laser beams 130 in the Y axis direction under the control by the scanning control unit 143 (FIG. 5). The substrate 3a is scanned with the pulse laser beams 130 in line along the Y axis direction.

The heat energy converted from the light energy of the pulse laser beams 130 surpasses the modification threshold of the substrate 3a in the region where the ink droplet 2 has been applied; the region where the ink droplet 2 is applied alone is selectively modified.

FIG. 6B is a diagram illustrating the state where the pulse laser beams 130 is applied to the region where the ink droplet 2 has been applied to the substrate 3a. The fiber laser 131 emits the pulse laser beams 130 on a particular timing under the control by the application control unit 144 (FIG. 5). The galvano mirror 133 swings at a particular swing frequency and repeatedly scans the pulse laser beams 130 in the Y axis direction under the control by the scanning control unit 143 (FIG. 5). The pulse laser beams 130 are applied in line along the Y axis direction to the region where the ink droplet 2 has been applied on the substrate 3a.

The substrate 3a is modified in the region where the pulse laser beams 130 has been applied owing to the heat energy converted from the light energy of the pulse laser beams 130 via the ink droplet 2,

Example of How Control Unit 14 Processes

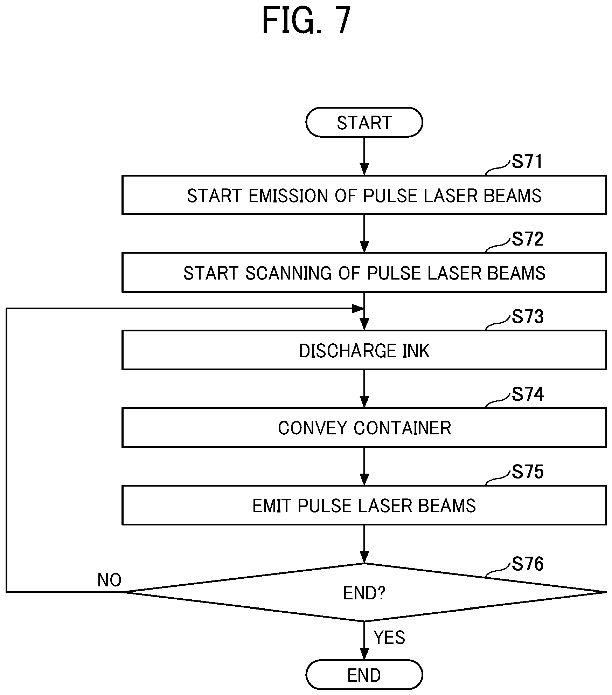

The processing by the control unit 14 illustrated in FIG. 5 is described with reference to FIG. 7. FIG. 7 is a flow chart illustrating an example of the image forming process by the control unit 14. FIG. 7 illustrates the processing after an operator starts an operation of the image forming device 1 for image forming.

The application control unit 144 initiates emitting the pulse laser beams 130 by the fiber laser 131 in the step S71. The fiber laser 131 repeats emitting the pulse laser beams 130 at a particular emission frequency.

The scanning control unit 143 swings the galvano mirror 133 to start scanning of the pulse laser beams 130 in the step S72. The galvano mirror 133 repeats scanning the pulse laser beams 130 at a particular swing frequency.

The discharging control unit 141 causes the ink discharging head 111 to discharge and apply ink to a substrate in the step S73.

The conveyance control unit 142 drives the translation stage 121 to convey the container in the step S74.

The pulse laser beams 130 is applied to the region of the substrate constituting the container that has reached the position in the conveyance direction of the translation stage 121 where the pulse laser beams 130 scans in the step S75. Of the substrate constituting the container, the region to which the ink droplet has been applied is selectively modified.

The control unit 14 determines whether to finish the processing in the step S76.

If determined to finish the processing (Yes to step S76), the processing ends. If determined to continue the processing (No to step S76), the processing returns to the step S73 and the processing after the step S73 is repeated.

The discharging control unit 141 and the conveyance control unit 142 cooperate and continue the processing from the step S73 to the step S75 without stopping the container. The control unit 14 forms images in this way.

Example of Image Forming

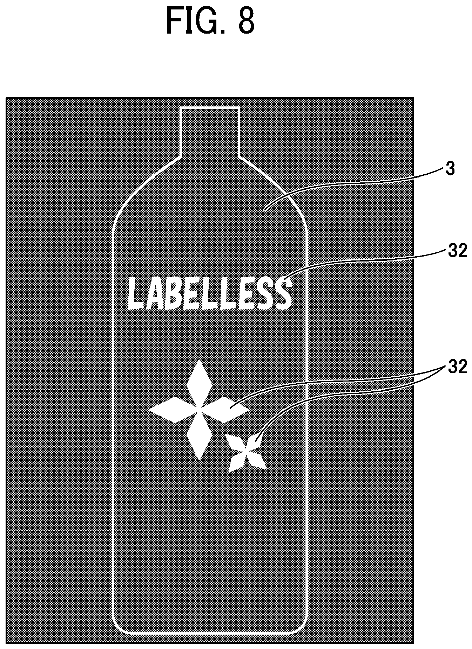

FIG. 8 is a diagram illustrating an example of the result of image forming process on the container 3 by the image forming device 1.

An image 32 including text of "LEBELLESS" and a shape pattern are formed on the substrate constituting the container 3.

Example of Working Effect of Image Forming Device 1

The working effect of the function of the image forming device 1 is described next.

Containers such as PET bottles having labels attached to the surface displaying text and images representing their names, components, expiration dates, bar codes, QR code®, recycling symbols, and logos are widely used. Design or pictures appealing to consumers on a label are used to demonstrate the characteristics of a product and increase the competitiveness.

Plastic garbage raises the concern of marine contamination; people are now actively demanding recyclable containers to save environment from pollution due to plastic garbage. This recycling system is that a recycling company turns a collected used container into flakes as raw materials of the container and manufactures a container again from the raw materials.

Through fractional recovery of containers and labels per material is preferable to operate such a recycling system; however, detaching labels from containers for fractional recovery takes time, which is a restriction for through fractional recovery.

A technology of applying light energy of laser beams to a transparent substrate such as transparent plastics constituting a PET bottle has been proposed. However, transparent substrates generally have a low absorbency of light having a wavelength on or above a certain level, such as 400 nm. This means, a laser light source having a large peak energy is required, which increases the cost of a device.

A technology of applying a conversion material such as ink for converting light energy into heat energy to a substrate and exposing the applied conversion material to laser beams to apply the heat energy to the substrate via the conversion material has been proposed.

In this configuration, the conversion material may remain on a substrate after the conversion material applied to the substrate is exposed to laser beams: it takes time to apply energy to the substrate by removing the remnant.

The device relating to the present embodiment at least applies a first energy (heat energy) to a substrate and includes a conversion material application unit for applying a conversion material (i.e., ink) for converting a second energy (light energy) to the first energy and an energy application unit for applying the second energy to the conversion material that has been applied to the substrate. The energy application unit applies the second energy corresponding to the amount of heat of the heat of evaporation of a conversion material or greater to the substrate.

The conversion material transfers the heat energy attributable to the heat generation on a basis of the second energy to the surface or inside of a substrate and receives the amount of heat corresponding to the heat of evaporation or greater; all of the conversion material evaporates. As a result, the conversion material entirely vaporizes but does not remain on the substrate while the substrate modifies in accordance with the melting, evaporation, crystallization, or foaming owing to the heat energy. It obviates the need for removing the conversion material remaining on a substrate and can minimize the time taken for the substrate to be modified.

A laser light source having a small peak energy in comparison with the case without a conversion material can be used to modify a transparent substrate by applying heat energy via a conversion material; the device cost is minimized.

The energy application unit preferably applies pulse laser beams having a pulse width of 200 micro seconds or less to a substrate. In general, the resolution of image formation is preferably from 100 to 400 dot per inch (dpi) when forming an image by modifying the substrate constituting a PET bottle. The distance between the dots forming an image is about 250 $\mu$m for 100 dpi and about 60 $\mu$m for 400 dpi.

As the pulse width of pulse laser beams increases for image formation, the cost decreases. However, a long pulse width may spread the sign of processing due to heat. Thermal diffusion length L as a representative length of heat diffusion can be represented by the following relationship:

$$L = 2\sqrt{(D \times T)},$$

where D represents a heat diffusion ratio (about 0.002 (cm$^2$/s for a PET bottle) and T represents a pulse width.

When the resolution is 400 dpi, visibility improves by modifying a region of about 60 $\mu$m$^2$. However, the melted region owing to heat energy is not preferable because it has a high transmission of light in comparison with an ablated region. For example, it is preferable that a half of the area of the region of 60 $\mu$m$^2$ be 15 $\mu$m or less on one side. In such a region, images formed by modifying the substrate constituting a PET bottle can have better visibility by setting the pulse width T to 200 microseconds or less on a basis of the material characteristics of the PET bottle.

In the present embodiment, the energy application unit (fiber laser) exposes both of the region where the conversion material application unit (ink discharging head) has applied a conversion material (ink droplets) to the substrate and the region free of the conversion material to laser beams to apply light energy to the conversion material. The first energy (thermal energy) converted from the light energy by the conversion material is higher than a particular modification threshold at the region of the substrate where the conversion material has been applied and is not higher than the particular modification threshold at the region free of the conversion material.

In this configuration, the region of a substrate where the conversion material has been applied is selectively modified because the first energy surpasses the modification threshold of the substrate at the region where the conversion material has been applied. Since this configuration obviates the need for controlling applying light energy to the region alone where the conversion material has been applied, the application of light energy can be made simple.

The energy application unit can apply laser beams to the region where the conversion material application unit has applied the conversion material to the substrate to add the light energy to the conversion material. In such a configuration, it is not necessary to adjust the peak energy of laser beams in such a manner that the first energy surpasses a particular modification threshold at a region where the conversion material is applied to the substrate. The conditions for image forming can be simply adjusted or set.

In the present embodiment, the conversion material application unit has a discharging unit (ink discharging head) for discharging a conversion material (ink droplet) and applies the ink droplet discharged from the discharging unit to the substrate. Patterns of the conversion material are readily formed on a substrate.

The conversion material in the present embodiment is ink but is not limited thereto. A solid or powder item can be used as a conversion material if the second energy having the amount of heat not less than the heat of evaporation of a conversion material can be added to the conversion material and it can convert the second energy into the first energy.

The conversion material application unit is not limited to the ink discharging head for applying a conversion material in the present embodiment. It is possible to apply ink droplets to a substrate by exposing ink to pulse laser beams emitted from a laser beam light source, thereby the ink droplets reaching the substrate. Alternatively, is possible for the conversion material conversion unit to dip a substrate in ink contained in an ink tank to apply the ink thereto.

The conversion material application unit and the energy application unit in the present embodiment may have variations. Such variations are described below. The same configuration as in the first embodiment described above has the same reference numerals and the descriptions therefor are omitted.

Variations

Ink Discharging Head

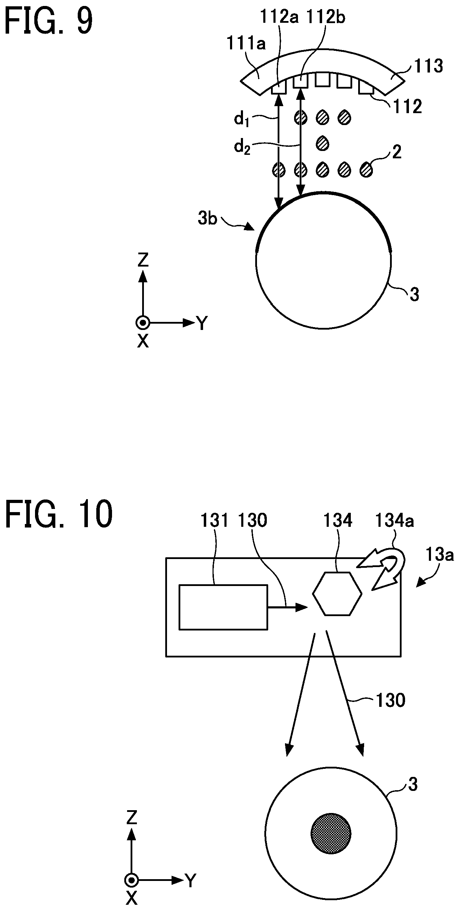

FIG. 9 is a diagram illustrating the configuration of the ink discharging head 111a relating to a variation. As illustrated in FIG. 9, the ink discharging head 111a includes a base plate 113.

The base plate 113 is a bent following a bent 3b of the tubular surface of the container 3 having a tubular form. Multiple nozzles 112 are formed on the base plate 113. The respective positions of the nozzles 112 along the Z axis direction change in accordance with the bent of the base plate 113. Owing to this configuration, the individual distances between the multiple nozzles 112 and the substrate constituting the container 3 are substantially equal along the Z axis direction.

A distance $d_1$ and a distance $d_2$ are substantially

the same when d1 represents the distance between a nozzle 112a of the multiple nozzles 112 and the substrate along the Z axis direction and d2 represents the distance between a nozzle 112b of the multiple nozzles 112 and the substrate along the Z axis direction.

The ink droplets discharged from the nozzles 112 may be deviated by air stream and reach positions other than the target positions on the substrate. If the distances between the nozzles and the substrate are not equal, how much air stream affects the ink droplets changes depending on the distances and the positions of the ink droplets discharged from the multiple nozzles vary from the targets on the substrate; the quality of images owing to the modification of the substrate deteriorates.

The respective distances between the multiple nozzles and the substrate along the Z axis direction are substantially equal when respective positions of the multiple nozzles 112 along the Z axis direction are different from each other; this configuration makes how much the air stream affects the ink droplets substantially equal among the nozzles. In this configuration, deviation of the positions of ink droplets discharged from individual nozzles on a substrate can be minimized so that the quality of image forming owing to the modification of the substrate ameliorates.

Exposing Unit

FIG. 10 is a diagram illustrating an example of the configuration of an exposing unit (irradiator) 13a relating to a variation. As illustrated in FIG. 10, the exposing unit 13a includes a polygon mirror 134.

The polygon mirror 134 is an example of the light scanning unit for scanning laser beams and has multiple reflection surfaces formed on a rotation body. When the polygon mirror 134 revolves at a high speed along a rotation direction 134a, the polygon mirror 134 scans the pulse laser beams 130 reflected along the Y axis direction. It is possible to scan the pulse laser beams 130 using an item such as the polygon mirror 134 instead of a galvano mirror.

Second Embodiment

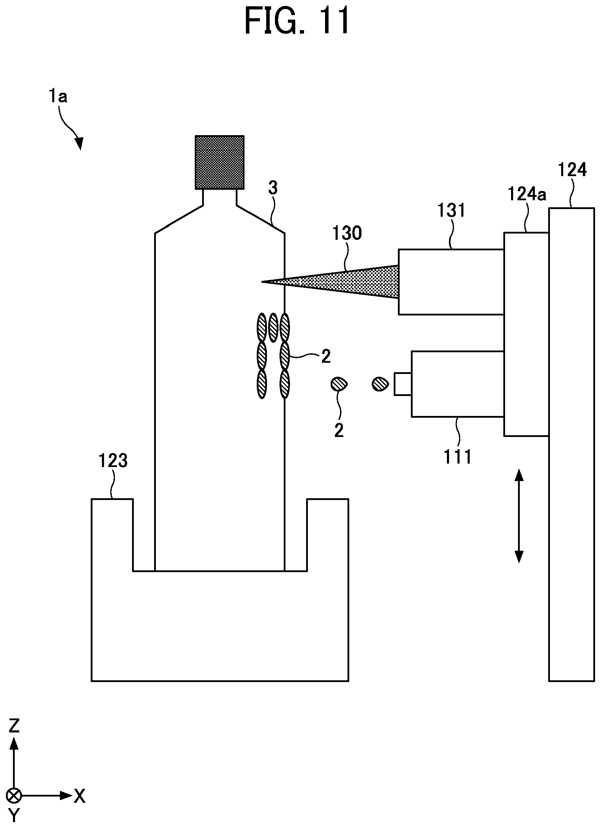

An image forming device 1a of the second embodiment of the present disclosure is described with reference to FIG. 11. The same configuration as in the first embodiment described above has the same reference numerals and the descriptions therefor are omitted.

FIG. 11 is a diagram illustrating an example of the configuration of the image forming device 1a. As illustrated in FIG. 11, the image forming device 1a has a Y axis stage 123 that translates along the Y axis direction and a Z axis stage 124 that translates along the Z axis direction.

The container 3 having a tubular form is fixed on the surface of a translation table of the Y axis stage 123 with the longitudinal direction of the tube along the Z axis direction. The ink discharging head 111 and the fiber laser 131 are fixed on the Z axis table 124a of the Z axis stage 124 side by side.

The ink discharging head 111 can discharge the ink droplet 2 toward the container 3 in the negative X axis direction (horizontal direction) and the fiber laser 131 can emit the pulse laser beams 130 toward the container 3 in the negative X axis direction. The latitude of the freedom of the layout of the image forming device 1a is maximized by configuring the image forming device 1a to be able to discharge ink in the horizontal direction and pulse laser beams in the horizontal direction.

Embodiments

Example of Entire Configuration of Image Forming Device 21

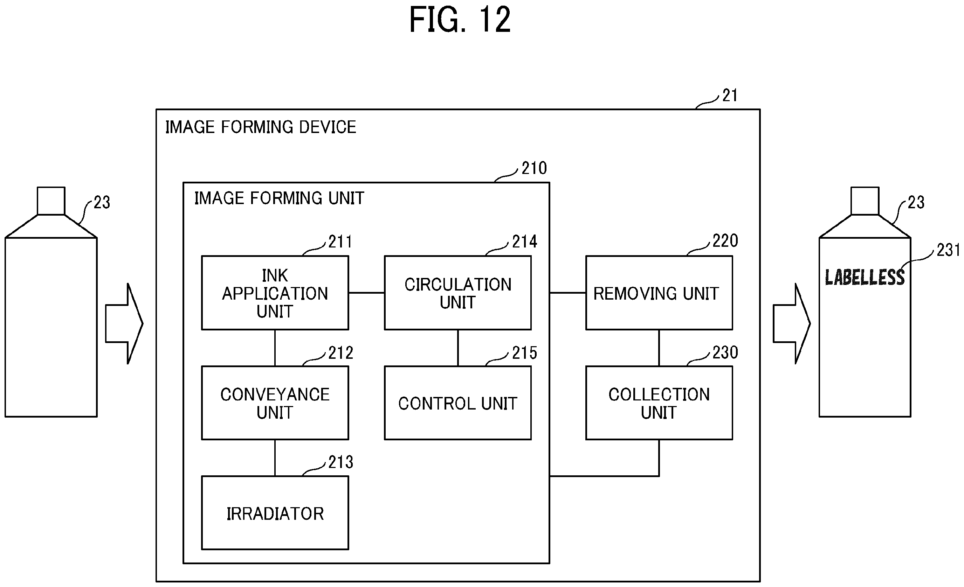

First, the entire configuration of an image forming device 21 is described with reference to FIG. 12. FIG. 12 is a block diagram illustrating an example of the entire configuration of the image forming device 21.

As illustrated in FIG. 12, the image forming device 21 includes an image forming unit 210, a removing unit 220, and a collection unit 230. The image forming unit 210 includes an ink application unit 211, a conveyance unit 212, an irradiator 213, a circulation unit 214, and a control unit 215. The image forming device 21 is an example of a device applying at least a first energy to a substrate.

The ink application unit 211 applies ink to a substrate constituting a container 23 conveyed to the image forming device 21. This ink is an example of the conversion material for converting light energy (second energy) to heat energy (first energy). The ink application unit 211 is an example of the conversion material application unit for applying a conversion material to a substrate.

The container 23 having a substrate to which the ink has been applied is conveyed by the conveyance unit 212 to the position where the irradiator 213 is disposed. The irradiator 213 is an example of the energy application unit for applying light energy to the conversion material applied to the substrate. The irradiator 213 emits pulse laser beams for application having a particular pulse width to the ink applied to the substrate constituting the container 23 after or during the conveyance of the container 23 to apply light energy to the ink. The pulse width means a time width during which laser beams are emitted. The circulation unit 214 circulates ink to supply it to the ink application unit 211.

The ink applied to the substrate constituting the container 23 absorbs the pulse laser beams emitted from the irradiator 213 and produces heat. Owing to this generated heat energy, the substrate is modified; an image is formed on the substrate of the container 23.

If the substrate of the container 23 is made of a material that little absorbs the wavelength of pulse laser beams to be applied, it is not possible to sufficiently absorb light energy so that the substrate does not produce heat energy enough to surpass the threshold of the modification of the substrate and fail to modify the substrate.

In the present embodiment, the substrate is modified because the ink applied to a substrate absorbs pulse laser beams and can produce a larger amount of heat than when the ink is not applied. A material that little absorbs the wavelength of pulse laser beams for application means that the material has a high transparency to the wavelength of pulse laser beams.

The removing unit 220 removes residual ink from the container 23 on which an image has been formed on the substrate. The residual ink means ink remaining on a substrate after the substrate is irradiated with pulse laser beams for application.
The removing unit 220 removes residual ink by supplying or spraying at least one of liquid, air, and light to the substrate. The removed residual ink is collected by the collection unit 230, supplied to the ink application unit 211, and reused for image forming.

The control unit 215 controls the behavior of the ink application unit 211, the conveyance unit 212, and the irradiator 213. The control unit 215 can be constituted to control the behavior of other elements such as the removing unit 220 and the collection unit 230. The configuration is not limited to the image forming unit 210 having the control unit 215. The removing unit 220 or the collection unit 230 may have the control unit 215 or the control unit 215 may be separately provided to the image forming device 21.

After the image forming device 21 forms an image on the substrate of the container 23, the container 23 is taken out of the image forming device 21. An image 231 containing text of "LABELLESS" is formed on the substrate constituting the container 23 in FIG. 12.

The image forming device 21 forms an image on the container 23 as an example of the target object. The container 23 has a base part and a neck part having a smaller cross sectional area than that of the base part and contains plastics such as PET.

The image forming device 21 can form images on the substrate constituting the container 23. The container as the target object is not limited to the form and the material of the container 23 but can be made of any material with any form. The target object is not limited to a container but can be any item.

Image Forming Process by Image Forming Device 21

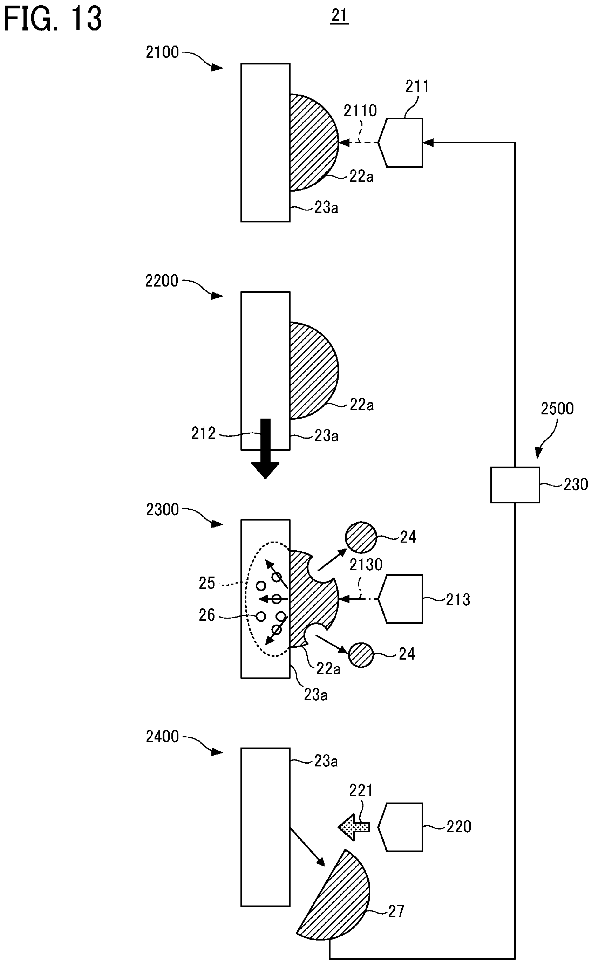

Next, the image forming process by the image forming device 21 is described with reference to FIG. 13. FIG. 13 is a diagram illustrating an example of the image forming process by the image forming device 21.

The image forming process by the image forming device 21 includes an application process 2100, a conveyance process 2200, an irradiation process 2300, a removing process 2400, and a collection process 2500.

The ink application unit 211 applies an ink droplet 22a which turns light energy into heat energy to a substrate 23a constituting the container 23 in the application process 2100. The ink droplet 22a is ink turned into a droplet. The ink droplet 22a is part of ink and also an example of the conversion material which turns light energy into heat energy.

One way of jetting the ink droplet 22a is for the ink application unit 211 to irradiate ink with pulse laser beams emitted from a laser beam source for jetting. The ink application unit 211 applies the ink to the substrate 23a by jetting the ink droplet 22a onto the substrate 23a along a jetting direction 2110. Alternatively, the ink application unit 211 applies the ink to the substrate 23a by discharging ink onto the substrate 23a from an ink discharging head for ink discharging. Alternatively, the ink application unit 211 can apply the ink to the substrate 23a by dipping the substrate 23a into ink stored in an ink tank.

In the conveyance process 2200, the conveyance unit 212 conveys the substrate 23a. Conveyance means a behavior of moving and rotating a container constituted of the substrate 23a. The conveyance unit 212 conveys the substrate 23a to which the ink droplet 22a has been applied to the position where the irradiator 213 in the image forming device 21 is disposed. In other words, the conveyance unit 212 conveys the substrate 23a to transition from the application process 2100 to the irradiation process 2300. The conveyance unit 212 conveys the substrate 23a in the entire image forming process in addition to the transition from the application process 2100 to the irradiation process 2300.

In the irradiation process 2300, the irradiator 213 exposes the ink droplet 22a applied to the substrate 23a to pulse laser beams 2130 for application to apply light energy to the ink. After the ink droplet 22a is exposed to the pulse laser beams 2130, a part of the ink droplet 22a is heated and evaporated, another part scatters as an ink dust 24, and the other absorbs light energy and produces heat. The ink droplet 22a may be result in other forms. A heat energy 25, as a result of the heat production by the ink droplet 22a, is transferred to the surface or inside of the substrate 23a. Owing to the heat energy 25, the surface or inside of substrate 23a melts, evaporates, crystallizes, or produces foams 26, which modifies the surface and/or the inside of the substrate 23a.

In the present embodiment, the irradiator 213 exposes the ink droplet 22a applied to the substrate 23a while the ink droplet 22a is liquid to pulse laser beams 2130 for application to apply light energy to the ink.

"The ink droplet 22a is liquid" means that almost all of the ink constituting the ink droplet 22a has liquidity as liquid. The ink constituting the ink droplet 22a gradually and partially loses liquidity and is solidified as drying proceeds and finally all of the ink is solidified. "The ink droplet 22a is liquid" means the state before the ink constituting the ink droplet 22a partially is solidified.

The irradiator 213 may irradiate the substrate 23a in the irradiation process 2300 after the substrate 23a holds still after the conveyance process 2200 is complete or while the substrate 23a is conveyed in the conveyance process 2200.

The removing unit 220 removes residual ink 27 by supplying at least one of liquid, air, and light to the substrate 23a in the removing process 2400. One way of the removing unit 220 removing the residual ink 27 is to peel off the residual ink 27 by spraying a liquid remover 221 to the substrate 23a

The liquid remover 221 reduces forces such as gravity, electrostatic force, Van der Waals' force, and surface tension between the residual ink 27 and the substrate 23a. A suitable remover is selected to suit to a particular property of the ink droplet 22a. One of such removers is a solution containing an alcoholic solvent when the ink is oleosus dye ink.

The liquid the removing unit 220 sprays is not limited to the liquid remover 221. For example, water is environmentally preferable because it is free of alcohol. The combinational use of ink composed of carbon ink and a water-soluble binder and water as the liquid the removing unit 220 supplies is more preferable because residual ink can be readily removed with water alone.

The removing unit 220 can remove the residual ink 27 by supplying air to the substrate 23a with an instrument such as an air blow. Alternatively, the removing unit 220 can remove the residual ink 27 by exposing the substrate 23a to light such as laser beams and flash light. The residual ink 27 melts or evaporates upon application of light energy such as laser beams or flash light and all of the residual ink 27 is removed from the substrate 23a. The removing unit 220 may remove the residual ink 27 with any combinational use of liquid, air, and light.

In the collection process 2500, the collection unit 230 collects the residual ink 27 peeled off from the substrate 23a in the removing process 2400 and supplies it to the ink application unit 211. The ink application unit 211 reuses the residual ink 27 supplied from the collection unit 230 as the ink to be applied to the substrate 23a.

The way of collecting the residual ink 27 in the collection process 2500 is suitably selected depending on which is used in the removing process 2400, liquid, air, or light. In the case of using liquid, liquid containing the residual ink 27 is sucked by a suction pump after ink is supplied to the substrate 23a. The residual ink 27 is extracted from the sucked liquid is supplied to the ink application unit 211. When light is used, liquid condensed from evaporated residual ink 27 is stored in a dew drop tank and the dew drops of the stored residual ink 27 are supplied to the ink application unit 211 via the dew drop ink.

The image forming device 21 forms images as described above. The image forming device 21 independently and chromatically conduct all the processes in such a manner that it completes one process and then starts the next process. Alternatively, the image forming device 21 can two or more processes simultaneously. It also can execute all the processes without suspending the substrate 23a.

In the present embodiment, the energy application unit is the irradiator 213, which is configured to expose the ink droplet 22a applied to the substrate 23a to the pulse laser beams 2130, but is not limited thereto. The energy application unit may apply microwave or radiation as the second energy to the ink droplet 22a applied to the substrate 23a.

Third Embodiment

Example of Configuration of Image Forming Unit 210

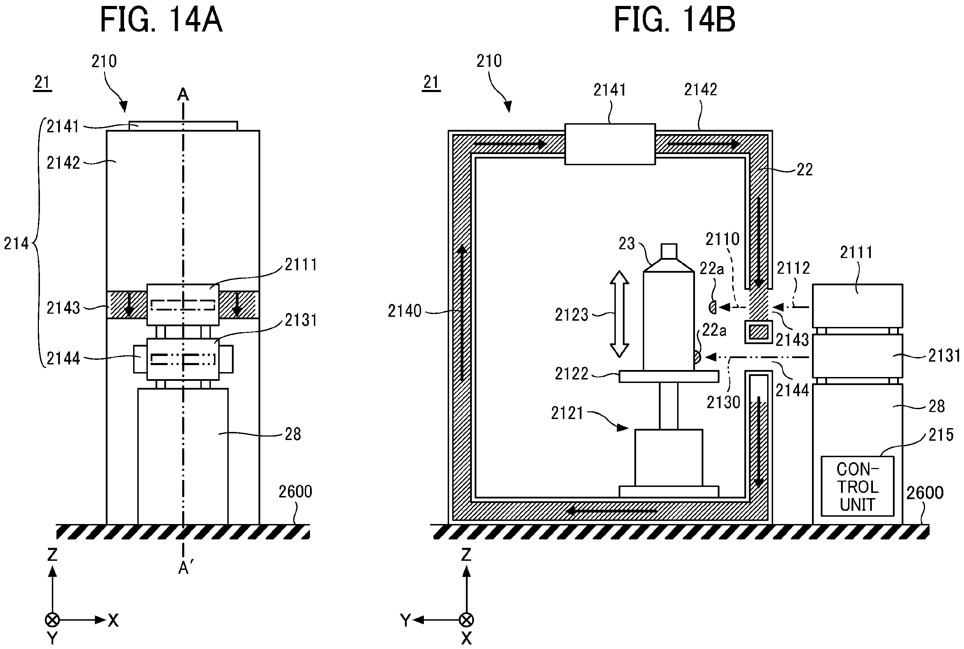

The image forming unit 210 of the image forming device 21 relating to the third embodiment of the present disclosure is described with reference to FIG. 14. FIG. 14A is a diagram illustrating a front view of an example of the configuration of the image forming unit 210. FIG. 14B is a cross sectional view of the image forming unit 210 illustrated in FIG. 14A along the A-A' line viewed from the negative X axis direction.

In the present embodiment, ink is jetted and applied onto a substrate by exposing it to pulse laser beams for jetting emitted by a laser light source for jetting.

Laser Induced Forward Transfer (LIFT) disclosed in documents such as US006025110A is to transfer foiled or liquidized material attached to a bearer by emitting laser beams in a non-contacting manner. The material is locally vaporized by heating and the vaporized material jets from the surface of a bearer along the irradiation direction. In the present embodiment, ink is jetted in the same mechanism as LIFT or a mechanism applying a force referred to as radiation pressure or both.

As illustrated in FIG. 14, the image forming unit 210 includes a fiber laser 2111 for jetting, a lifting stage 2121, a fiber laser 2131 for application, a circulation unit 214, and a control unit 215. The circulation unit 214 includes a pump 2141 and a flow passage 2142. The image forming unit 210 is disposed on a floor 2600.

The flow passage 2142 is constituted by combining ducts with a rectangular cross section in which the ink 22 flows and forms a square shape as a whole. The ink 22 illustrated as oblique lines in FIG. 14B means ink flowing inside the flow passage 2142. The circulation direction 2140 illustrated by the bold arrow indicates the direction of the ink 22 flowing inside the flow passage 2142. The amount of the ink 22 flowing inside the flow passage 2142 is exaggerated in FIG. 14 to clarify the purpose of description although the real amount of the ink 22 flowing inside the flow passage 2142 is small; the ink 22 flows inside the flow passage 2142 and is ready to jet upon an irradiation of pulse laser beams for jetting. The ink 22 flows inside the flow passage 2142 with a thickness of a film so that it can be jetted upon an application of pulse laser beams for jetting.

The material of the dust constituting the flow passage 2142 is not particularly limited; the duct can be made of a substance such as plastics, glass, and metal. The duct may be made of transparent material having a transparency to visible light or opaque material. It is preferable to select opaque material to prevent the ink flowing inside the flow passage 2142 from being thickened by the light from the outside.

The flow passage 2142 constitutes a box-like form member with a side perpendicular to the X axis open. A lifting stage 2121 as the conveyance unit is disposed inside the box-like form member. The lifting stage 2121 has a table 2122 capable of lifting up and down and a container 23 on the surface is placed on the table 2122 on the side of the appropriate Z axis direction. A driving unit such as a motor is connected to the lifting stage 2121. The lifting stage 2121 changes the position of the container 23 along a conveyance direction 2123 indicated by the outlined arrow by moving the table 2122 along the conveyances direction 2123 by the driving force of the driving unit.

A carrier 28 is disposed outside the box-like form member constituted of the flow passage 2142 on the side of the negative Y axis of direction and carries the fiber laser 2131 for application and the fiber laser 2111 for jetting in this order. The fiber laser 2131 for application and the fiber laser 2111 for jetting are disposed to emit pulse laser beams toward the positive side relating to the Y axis direction where the flow passage 2142 is situated.

The duct on the positive side relating to the Z axis direction of the ducts constituting the flow passage 2142 has the pump 2141. The pump 2141 is an example of the circulation driving unit for sending and sucking the ink 22.

The ink 22 circulates in the flow passage 2142 along a circulation direction 2140 by sending and sucking the ink 22 by the pump 2141 as a driving force. As the pump 2141, any pump employing a method using pneumatic pressure, hydraulic pressure, or electric driving can be used as long as it can send and suck liquid

The duct on the side of the negative Y axis direction of the ducts constituting the flow passage 2142 has an exposure portion 2143 and an opening portion 2144.

The exposure portion 2143 exposes the ink 22 flowing inside the flow passage 2142 from the flow passage 2142 and is disposed at the position facing the fiber laser 2111 for jetting. The exposure portion 2143 can be formed by removing the duct constituting the flow passage 2142 corresponding to the exposure portion 2143 alone. The ink 22 is exposed to air at the exposure portion 2143 and fallen by gravity like a fall on the side of the negative Z axis direction. The fiber laser 2111 for jetting irradiates the ink 22 exposed at the exposure portion 2143 with the pulse laser beams 2112 for jetting.

The pulse laser beams 2130 passes through an opening portion 2144. The opening portion 2144 is formed in the duct constituting the flow passage 2142 at the position facing the fiber laser 2131 for application.

The ink 22 does not flow at the opening portion 2144 but in the duct around it. For example, it is possible to make a piercing hole at a part of the duct to form the opening portion 2144. In FIG. 14B, the opening portion 2144 has a rectangular cross section but is not limited thereto. The opening portion 2144 may have a cross section of any form such as a circular form.

Since the ink 22 does not flow in the opening portion 2144, the pulse laser beams 2130 for application passes through the opening portion 2144 not blocked by the flow passage 2142 when the fiber laser 2131 for application emits the pulse laser beams 2130 for application toward the opening portion 2144. This configuration makes it possible to irradiate the ink droplet 22a applied to the substrate constituting the container 23 with the pulse laser beams 2130 for application through the opening portion 2144.

The fiber laser 2111 for jetting is a laser light source for jetting that emits the pulse laser beams 2112 for jetting. The fiber laser 2111 for jetting has multiple fiber lasers arranged along the X axis direction. Fiber laser is a type of solid laser using optical fiber as the amplifying medium. Fiber laser is a laser light source having a high energy conversion ratio in comparison with a solid laser using a laser crystal because it confines light in thin optical fiber.

The fiber laser 2111 for jetting can emit the pulse laser beams 2112 with an emission pattern extending in line along the X axis direction. It is possible to emit the pulse laser beams 2112 for jetting having an emission pattern with on and off portions in a line by controlling emission (on) and non-emission (off) of multiple fiber lasers individually.

The wavelength of the pulse laser beams 2112 for jetting is not particularly limited; it is preferably from 300 nm to 11 $\mu$m. The ink droplet 22a has an absorption ratio of 50 percent or more to the wavelength of from 700 to 1500 nm in accordance with the peak energy.

The light energy the pulse laser beams 2112 for jetting applies to the ink droplet 22a to jet it can be obtained by exposing the ink droplet 22a to the pulse laser beams 2112 for jetting having a peak energy (laser power) of from 6 to 8 W with a pulse width of 25 $\mu$s on an area having a diameter of from 100 to 200 $\mu$m.

The laser light source for jetting is not limited to a configuration having multiple fiber lasers. The laser light source for jetting may include a single fiber laser and a scanning device such as a galvano mirror. The pulse laser beams emitted from the single fiber laser are scanned by a scanning device to generate and emit the pulse laser beams 2112 for jetting for linear emission patterns extending along the X axis direction.

The laser light source for jetting is not limited to a fiber laser but can be any type of laser light sources. Laser light sources capable of oscillating pulses in the range of from pico to nano seconds are preferable. Solid laser includes YAG laser and titanium sapphire laser. Gas laser includes argon laser, helium neon laser, and carbon dioxide laser. Semiconductor laser is preferable because it is small. Fiber laser is the most suitable light source to achieve a high peak energy and minimize the size.

The ink exposed to the pulse laser beams 2112 for jetting among the ink 22 exposed at the exposure portion 2143 is jetted along the positive Y axis direction as the ink droplet 22a. The jetting direction 2110 indicated by the dotted line in FIG. 14B is the direction along which the ink droplet 22a jets. The ink droplet 22a jetted is applied to the substrate constituting the container 23.

The ink 22 is irradiated with the pulse laser beams 2112 for jetting having an emission pattern containing on and off portions therein extending along the X axis direction. Multiple ink droplets 22a arranged in line along the X axis direction are jetted in accordance with the emission pattern of the pulse laser beams 2112 for jetting and applied to the substrate constituting the container 23; the ink droplets 22a are jetted to the portion corresponding to the on portion in the emission pattern and applied to the substrate constituting the container 23. The ink droplet 22a is not jetted to the portion corresponding to the off portion in the emission pattern and not applied to the substrate.

The fiber laser 2131 for application is an example of the energy application unit for applying light energy to the ink droplet 22a applied to the substrate. The fiber laser 2131 for application has multiple fiber lasers arranged along the X axis direction like the fiber laser 2111 for jetting. The fiber laser 2131 for application can emit the pulse laser beams 2130 for application with a linear emission pattern extending along the X axis direction.

The fiber laser 2131 for application applies light energy to the ink droplet 22a with the pulse laser beams 2130 for application while the ink droplet 22a jetted by the irradiation of the pulse laser beams 2112 for jetting applied to the substrate constituting the container 23 is liquid.

The time taken for the ink droplet 22a to be completely solidified after the solidification starts depends on the drying property of the ink droplet 22a, i.e., how readily the ink droplet 22a is dried. For this reason, the distance between the fiber laser 2111 for jetting and the fiber laser 2131 for application and the conveyance speed of the container 23 by the lifting stage 2121 are preliminarily determined in accordance with the drying property of the ink droplet 22a to irradiate the ink droplet 22a applied to the substrate with the pulse laser beams 2130 for application while the ink droplet applied to the substrate is still liquid.

The wavelength of the pulse laser beams 2130 for application is preferably from 300 nm to 11 $\mu$m like the pulse laser beams 2112 for jetting. The wavelength of the pulse laser beams 2130 for application is particularly preferably from 700 to 1,500 nm to modify a substrate with a sufficient peak energy. The ink 22 preferably has an absorption ratio of 50 percent or more to the wavelength of from 700 to 1500 nm in accordance with this peak energy.

The configuration of the laser light source for application and the type of the laser light source used as the laser light source for application are the same as those described for the laser light source for jetting and the same description is omitted; it is, however, preferable that the laser light source for application have a larger peak energy than the laser light source for jetting to modify a substrate.

The pulse laser beams 2130 for application that has been emitted from the fiber laser 2131 for application and passed through the opening portion 2144 reach the substrate constituting the container 23 disposed on the side of the positive X axis direction of the opening portion 2144 to apply the light energy to the ink droplet 22a applied to the substrate. Owing to the heat produced by the ink droplet 22a in accordance with the light energy applied, an image corresponding to the pattern to which the ink droplet 22a is applied is formed on the substrate constituting the container 23.

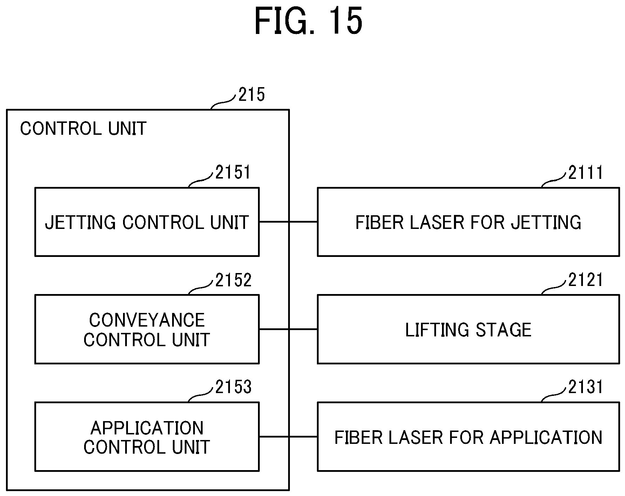

The control unit 215 is constituted of electric circuits and stored in the carrier 28. The control unit 215 execute the various functions described with reference to FIG. 15. Part of the functions can be executed by software executed by central processing unit (CPU) and can be achieved by multiple circuits or multiple softwares. The position of the control unit 215 is not limited to the inside of the carrier 28 but can be anywhere inside or outside the image forming device 21.

Example of Functional Configuration of Control Unit 215

Next, the functional configuration of the control unit 215 is described with reference to FIG 15. FIG. 15 is a block diagram illustrating an example of the functional configuration of the control unit 215. As illustrated in FIG, 15, the control unit 215 includes a jetting control unit 2151, a conveyance control unit 2152, and an application control unit 2153.

The jetting control unit 2151 controls on and off of emission of pulse laser beams 2112 for jetting of each fiber laser of the fiber laser 2111 for jetting. It also controls the timing of emitting the pulse laser beams 2112 for jetting by the fiber laser 2111 for jetting.

The conveyance control unit 2152 controls the driving of the lifting stage 2121 and the position, the conveyance direction, and the conveyance speed in the conveyance direction 2123 (FIG. 14) of the container 23 placed on the table 2122 of the lifting stage 2121.

The application control unit 2153 controls on and off of the emission of pulse laser beams 2130 for application of each fiber laser of the fiber laser 2131 for application. It can also control the timing of emitting the pulse laser beams 2130 for application by the fiber laser 2131 for application.

In the control unit 215, the jetting control unit 2151 controls the fiber laser 2111 for jetting to emit the pulse laser beams 2112 for jetting. Thereafter, the conveyance control unit 2152 drives the lifting stage 2121 to convey the container 23 to the position of the emission of the pulse laser beams 2130 for application. The application control unit 2153 controls the fiber laser 2131 for application to emit the pulse laser beams 2130 for application on the timing when the region of the container 23 to which the light energy is applied reaches the position where the pulse laser beams 2130 for application is emitted in the image forming device. The application control unit 2153 controls on and off of the emission of the pulse laser beams 2130 for application to emit the pulse laser beams 2130 for application in the region of the substrate constituting the container 23 where the ink droplet 22a is applied.

In other words, the fiber laser 2131 for application emits the pulse laser beams 2130 for application under the control of the control unit 215 in response to the timing when the fiber laser 2111 for jetting applies the ink droplet 22a to the substrate 23a, thereby applying the light energy.

The peak energy of the pulse laser beams 2130 for application can be preliminarily determined in such a manner that the substrate is modified when the ink-applied region is exposed to the pulse laser beams 2130 for application and is not modified when the ink-not applied region is exposed to the pulse laser beams 2130 for application. That is, the peak energy of the pulse laser beams 2130 for application is determined to surpass the threshold of the modification only in the region of the substrate where the ink droplet 22a is applied.

Under this condition, only the region where the ink droplet 22a is applied can be selectively modified even when all the fiber lasers of the fiber laser 2131 for application emit the pulse laser beams 2130 for application. This selective modification obviates the need for controlling on and off of the emission of the fiber laser 2131 for application. This is preferable to simplify controlling.

Example of Behavior of Jetting of Ink Droplet 22a

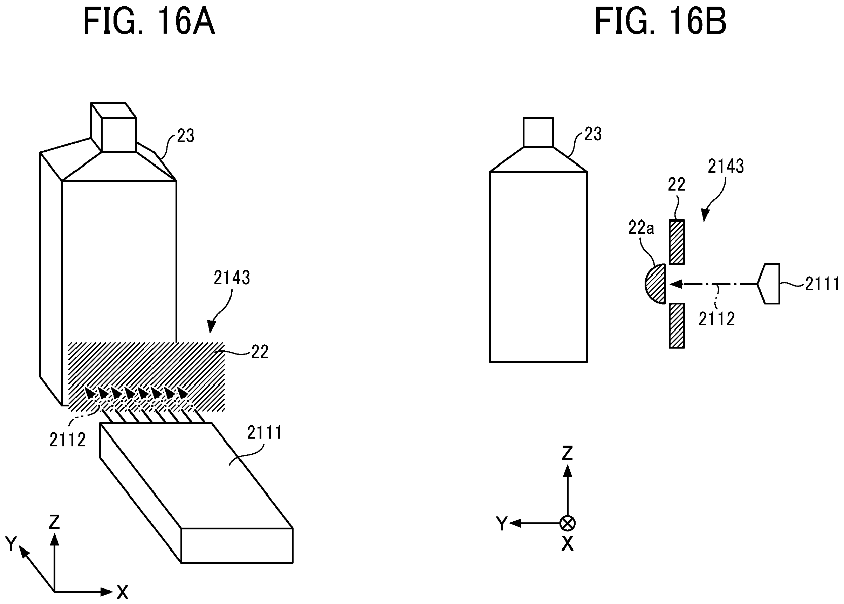

The behavior of jetting of the ink droplet 22a in the application process is described with reference to FIG. 16.

FIGS. 16A and 16B are respectively a perspective view and a side view illustrating an example of the behavior of jetting of the ink droplet 22a.

As illustrated in FIG. 16, the fiber laser 2111 for jetting emits the pulse laser beams 2112 to the ink 22 passing through the exposure portion 2143. Of the ink 22, the ink irradiated with the pulse laser beams 2112 for jetting having an energy sufficient for jetting jets toward the container 23 as the ink droplet 22a. The ink droplet 22a jetted is applied to the substrate constituting the container 23. The container 23 to which the ink droplet 22a is applied is conveyed along the negative X axis direction and be ready to the exposure process.

Example of Behavior of Irradiator 213

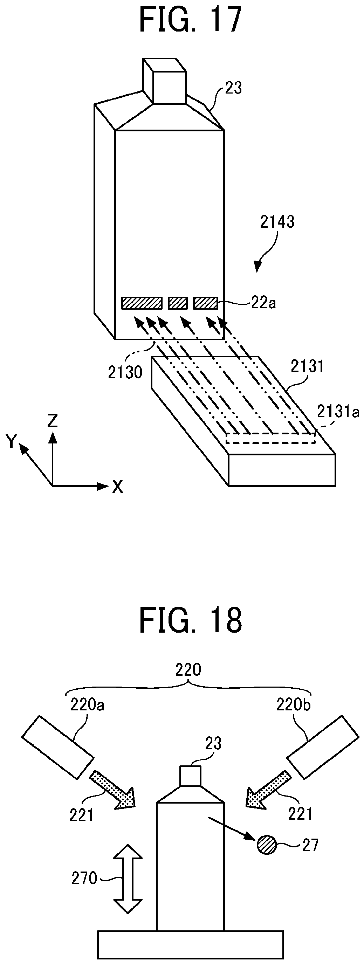

Next, the behavior of the irradiator 213 in the exposure process is described with reference to FIG. 17. FIG. 17 is a diagram illustrating a perspective view of an example of the behavior of the irradiator 213.

As illustrated in FIG. 17, the fiber laser 2131 for application in the irradiator 213 has a fiber laser array 2131a. The fiber laser array 2131a is disposed in one dimension and an example of multiple laser sources emitting pulse laser beams 2130 to application. The fiber laser 2131 for application exposes the ink droplet 22a applied to the substrate constituting the container 23 to the pulse laser beams 2130 for application each fiber in the fiber laser array 2131a emits.

There are regions in the substrate where the ink droplet 22a is applied or not applied depending on the emission pattern of the pulse laser beams 2112 for application applied in the application process. The fiber laser 2131 for application irradiates the region in the substrate to which the ink droplet 22a is applied with the pulse laser beams 2130 for application.

The ink droplet 22a exposed to the pulse laser beams 2130 for application produces heat and this heat modifies the region in the substrate to which the ink droplet 22a is applied.

Example of Behavior of Removing Unit 220

Next, the configuration of the removing unit 220 in the removing process is described with reference to FIG. 18. FIG. 18 is a diagram illustrating an example of the behavior of the removing unit 220. The removing unit 220 can be separately provided other than the image forming unit 210 illustrated in FIG. 14 and alternatively integrated therewith. The container 23 is conveyed by the conveyance unit 212 to the position where the removing unit 220 removes the residual ink 27 after an image is formed by the image forming unit 210.

As illustrated in FIG. 18, the removing unit 220 includes a spraying nozzle 220a and a spraying nozzle 220b and sprays a liquid remover 221 toward the container 23 from the spraying nozzles 220a and 220b. The residual ink 27 is peeled off and removed off from the substrate constituting the container 23 owing to the spraying pressure and/or chemical action of the liquid remover 221. The residual ink 27 removed is collected in the collection process.

The present embodiment can be improved on the following points like the action of the image forming device 21 described above.

(1). The position of a conversion material may change owing to dripping and spreading of the conversion material when applying the conversion material to a substrate. Such dripping and spreading degrade the processing and the quality of image formation utilizing the modification of a substrate because the position on the substrate where heat energy is applied varies so that the position to be modified is not stabilized.

(2). When a conversion material in the liquid state is exposed to laser beams having a large peak energy, the conversion material evaporates sooner than when the conversion material is dried and solidified; the time taken for the heat energy converted from light energy is shortened so that the portion around the surface of the substrate alone can be modified. It is not possible to form deep concave portions on a substrate. For this reason, it is preferable to emit laser beams after a conversion material is dried and solidified. The time taken for modification becomes longer by the time taken for the ink to be dried and solidified. This way of radiation makes the time taken for processing and image formation utilizing the modification of a substrate longer.

The device relating to the present embodiment at least applies a first energy (heat energy) to a substrate. It includes a conversion material application unit for applying a conversion material (ink) for converting a second energy (light energy) to the first energy and an energy application unit for applying the second energy to the conversion material that has been applied to the substrate. The energy application unit applies the second energy to a conversion material while the conversion material applied to a substrate is liquid.

This way of application of the second energy obviates the need for drying and solidifying the conversion material so that the time taken for application of energy to the substrate can be shortened. For this reason, it is possible to shorten the time taken for processing an image formation utilizing the modification of a substrate by application of energy is shortened.

This way of application of the second energy also reduces dripping and spreading of the conversion material within the time taken for ink to be dried and solidified, thereby reducing the change of the position where heat energy is applied via the conversion material. For this reason, the position on the substrate where modification occurs is stabilized, which makes it possible to enhance the quality of processing and image forming owing to the modification of the substrate.

A laser light source having a small peak energy in comparison with the case without a conversion material can be used to modify a transparent substrate by applying heat energy via a conversion material; the device cost is minimized.

When a substrate such as a PET bottle composed of material containing transparent plastics is modified to form an image thereon, it is preferable to render the image visible by scattering light by modification (foaming) around the surface of the substrate.

By contrast, in the present embodiment, it is possible to evaporate a conversion material in a short period of time in comparison with the case where a conversion material is dried and solidified because a liquid conversion material is exposed to laser beams having a large peak energy. This energy application makes it possible to shorten the time taken for energy transmission to a substrate, so that the surface and the vicinity thereof are readily modified; patterns such as images formed by modifying a substrate such as a PET bottle containing transparent plastics are rendered readily visible. The present embodiment is particularly suitable for a substrate composed of material containing transparent plastics.

It is preferable that the laser light source for application emit laser beams for application having a wavelength of from 700 to 1,500 nm and the conversion material have an absorption ratio of 50 percent or more to the wavelength of from 700 to 1,500 nm. Under such a condition, it is possible to obtain larger heat energy from larger light energy, thereby enhancing the modification efficiency of a substrate.

In the present embodiment, the energy application unit has multiple fiber lasers for emitting laser beams for application. The fiber lasers are arranged in one dimension and constitutes a fiber laser array. The fiber laser array irradiates a substrate with laser beams for application having a linear emission pattern and modifies the substrate in accordance with the emission pattern almost at the same time. This configuration makes it possible to increase the speed of processing and image formation by the modification to a substrate.

It is preferable to configure the energy application unit to apply light energy to a conversion material by exposing the region of the substrate where the conversion material application unit has applied the conversion material to laser beams for application because the conversion efficiency from light energy to heat energy is maximized.

That the energy application unit applies light energy in response to the timing when the conversion material application unit applies a conversion material to a substrate is preferable because light energy is accurately applied to the conversion material applied to the substrate while the conversion material is liquid.

The present embodiment includes a circulation unit for circulating a conversion material to supply the conversion material to the conversion material application unit. The conversion material application unit applies the conversion material by jetting some of the conversion material circulated by the circulation unit toward the substrate.

Since the change in the properties such as thickening of a conversion material can be minimized by circulating the conversion material, it is possible to apply heat energy to a substrate by using the conversion material with uniform property.

In the present embodiment, the conversion material application unit includes a laser light source for jetting for emitting laser beams for jetting. The laser light source emits laser beams for jetting to jet part of the conversion material circulated by the circulation unit. The flow passage into which a conversion material flows in the circulation unit has an exposure portion for exposing the conversion material flowing in the flow passage from the flow passage. The laser light source for jetting emits laser beams for jetting to the conversion material exposed at the exposure portion. This configuration makes it possible to jet a conversion material without contacting the conversion material.

In this embodiment, the circulation unit has a flow passage in which the conversion material flows. The flow passage has an opening through which the laser beams for application pass. This configuration makes it possible to directly apply laser beams for application to the conversion material applied to a substrate without being blocked by the conversion material flowing in the flow passage.

The present embodiment further includes a removing unit for removing the residual ink of the conversion material remaining on the substrate after the application of light energy by supplying at least one of liquid, air, and light to the substrate. It removes the conversion material while the conversion material remaining on a substrate is liquid.

When the conversion material remaining is liquid, the conversion material flows. Such conversion material can be readily removed by supplying liquid or air to the substrate. Dust may be produced if dried and solidified conversion material is removed. Such dust requires a separate device to collect it. Since the conversion material removed is liquid in the present embodiment, the conversion material can be removed without producing dust, which obviates the need for a collection device.

For a conversion material containing carbon and a water soluble binder, the removing unit can remove the remaining conversion material by supplying only water to a substrate. Since water is friendly to the environment in comparison with a solvent, the remaining conversion material can be removed while minimizing the burden on the environment.

The conversion material in the present embodiment is ink but is not limited thereto. It is possible to use any material that can turn the second energy into the first energy.

In the present embodiment, the conversion material application unit is configured to have a laser light source for jetting for emitting laser beams for jetting but is not limited thereto. The conversion material application unit can be modified. Such variations are described below.

Variations

First Variation of Conversion Material Application Unit

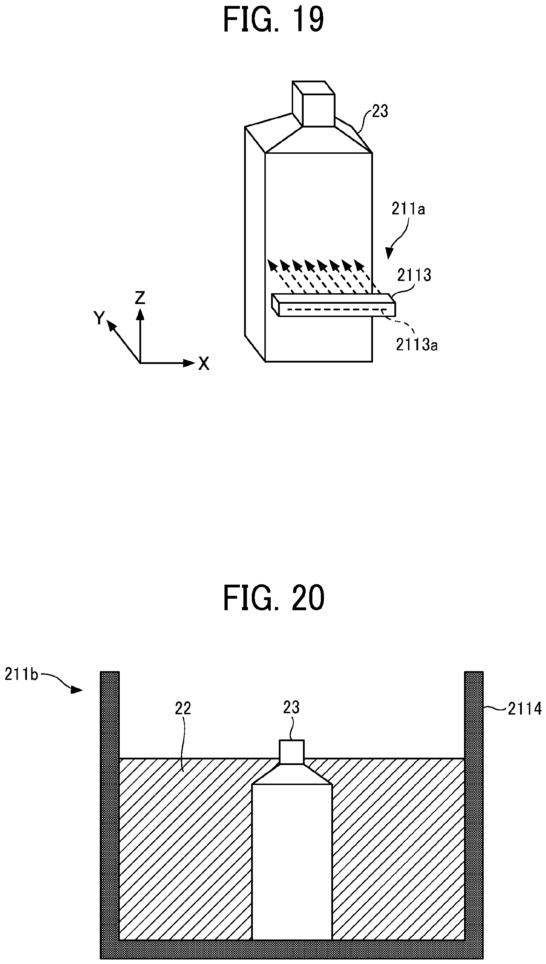

FIG. 19 is a diagram illustrating an example of the configuration of the ink application unit 211a as the conversion material relating to the first variation. As illustrated in FIG. 19, the ink application unit 211a has an ink discharging head 2113.

The ink discharging head 2113 is part of the discharging unit for discharging ink (conversion material). The ink discharging head 2113 discharges ink to attach the ink droplet to the substrate constituting the container 23.

The control unit in the image forming unit including the ink discharging head 2113 may have a configuration in which the jetting control unit 2151 illustrated in FIG. 15 is replaced with a discharging control unit for controlling the discharging of the ink droplet 22a by the ink discharging head 2113. The discharging control unit controls discharging or non-discharging and the timing of discharging ink from each nozzle of the ink discharging head 2113.

The ink discharging head 2113 has multiple nozzles 2113a arranged in line along the X axis direction. The ink discharging head 2113 discharges or jets ink from each of the nozzles 2113a. An item using a piezoelectric actuator (laminated piezoelectric element and thin-layered piezoelectric element), a thermal actuator using a thermoelectric conversion element such as a heat element, or an electrostatic actuator including a diaphragm and a counter electrode is suitable as the energy generating source for discharging ink.

The ink discharging head 2113 discharges ink droplets from each of the nozzles 2113a to make them reach the substrate constituting the container 23 almost at the same time so that a linear pattern can be formed along the Y direction on the substrate. The ink droplet 22a can be applied to the substrate constituting the container 23 to form a desired two-dimensional pattern by forming a linear pattern by the ink discharging head 2113 while conveying the container 23 along the Z axis direction.

The ink discharging head 2113 is not limited to the nozzles 2113a arranged in line but may be configured to have a single nozzle. It is possible to form a linear pattern on a substrate constituting the container 23 by discharging the ink droplet 22a while moving the single nozzle along the X axis direction.

The ink application unit 211a may have an ink discharging unit as a collective form of parts relating to ink discharging in which a functional part and/or an assembly are integrated into an ink discharging head.

For example, the ink discharging unit includes a combination of an ink discharging head and at least one of a head tank, a carriage, a supplying mechanism, a maintenance and recovery mechanism, and the main scanning moving mechanism.

The ink application unit 211a may have a spray for spraying a conversion material instead of the ink discharging head. The spray means a device for spraying liquid in a fog or foam form by gas like high pressure air or using a mechanical device.

Second Variation of Conversion Material Application Unit

FIG. 20 is a diagram illustrating an example of the configuration of the ink application unit 211b as the conversion material unit relating to the second variation example. As illustrated in FIG. 20, the ink application unit 211b includes a tank 2114. The tank 2114 is an example of the discharging unit for discharging ink (conversion material). The ink application unit 211b applies ink to the substrate constituting the container 23 by dipping the container 23 into the ink stored in the tank 2114.

The container 23 can be dipped into the tank 2114 by manual operation by an operator of an image forming device or a maintaining or moving mechanism such as a robot. Ink can be applied in a larger region of a substrate in parallel owing to this dipping of the container 23 into the ink stored in the tank 2114.

Fourth Embodiment

The image forming device 21a of the fourth embodiment is described next. The same configuration as in the third embodiment described above has the same reference numerals and the same descriptions are omitted.

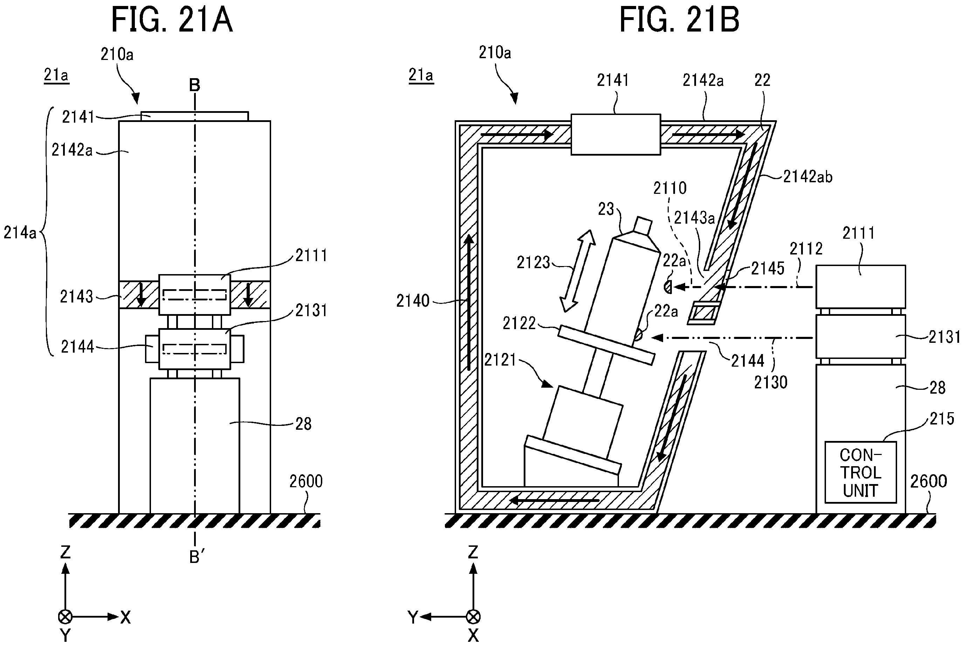

FIG. 21 is a diagram illustrating an example of the configuration of an image forming unit 210a of the image forming device 21a relating to the present embodiment. FIGS. 21A and 21B are respectively a front diagram illustrating an example of the configuration of the image forming unit 210a according to a fourth embodiment of the present disclosure and a cross sectional diagram of FIG. 21A cut along the B-B' line viewed from the negative X axis line. As illustrated in FIG. 21, the image forming unit 210a includes a circulation unit 214a. The circulation unit 214a has a flow passage 2142a.

As illustrated in FIG. 21B, a duct 2142ab provided along the negative Y axis direction of the ducts constituting the flow passage 2142a is disposed diagonally to the Z axis direction. The flow passage 2142a includes an exposure portion 2143a for exposing the ink 22 flowing in the flow passage 2142a from the flow passage 2142a.

The exposure portion 2143a includes a transparent member 2145 transparent to the pulse laser beams 2112 for jetting emitted by the fiber laser 2111 for jetting. The transparent member 2145 is disposed along the surface of the duct 2142ab on the side of the fiber laser 2111 for jetting.

The pulse laser beams 2112 for jetting emitted from the fiber laser 2111 for jetting passes through the transparent member 2145 and is applied to the ink 22 flowing in the duct 2142ab. The ink 22 exposed to the pulse laser beams 2112 for jetting is turned into droplets, jetted towards the container 23 as the ink droplet 22a, and applied to the substrate constituting the container 23.

The conveyance direction 2123 of the lifting stage 2121 is diagonally disposed along the decline of the duct 2142ab in order for the lifting stage 2121 to convey the container 23 along the decline of the duct 2142ab.

Since the behavior of the fiber laser 2131 for application is the same as that described for the third embodiment, the description thereof is omitted.

The configuration in which the ink 22 passing through the exposure portion falls by gravity like the image forming unit 210 (FIG. 14) of the third embodiment may be difficult to control the thickness of the ink 22 in some cases. The thickness of the ink 22 means the length along the jetting direction of the ink as a lamp passing through the exposure portion. As the thickness of the ink 22 varies, the direction and the speed of jetting of the ink droplet 22a vary. Owing to this variation, a desired pattern is not formed on the substrate because the position of the ink droplet 22a onto the substrate constituting the container 23 changes.

In the configuration in which the ink 22 passing through the exposure portion falls by gravity, the ink 22 scatters through the exposing unit to the outside of the image forming unit, thereby contaminating the inside or the surrounding of the image forming device.

In the present embodiment, the duct 2142ab is slanted to the Z axis and the transparent member 2145 is provided to the exposure portion 2143a. In such a configuration, the ink 22 can flow along the flow passage 2142a instead of falling by gravity; the thickness of ink 22 can be readily controlled in comparison with the case of falling by gravity. It is possible to minimize scattering of the ink 22 through the exposure portion 2143a to the outside of the image forming unit and reduce the contamination inside or around the image forming device 21a.

Since the pulse laser beams 2112 for jetting passes through the transparent member 2145, the fiber laser 2111 for jetting can apply energy to jet the ink 22 which is flowing inside the flow passage 2142a through the transparent member 2145.

Since the effects other than described above are the same as that described for the third embodiment, the description thereof is omitted.

Having generally described preferred embodiments of this disclosure, further understanding can be obtained by reference to certain specific examples which are provided herein for the purpose of illustration only and are not intended to be limiting. In the descriptions in the following examples, the numbers represent weight ratios in parts, unless otherwise specified.

Numerous additional modifications and variations are possible in light of the above teachings. It is therefore to be understood that, within the scope of the above teachings, the present disclosure may be practiced otherwise than as specifically described herein. With some embodiments having thus been described, it will be obvious that the same may be varied in many ways. Such variations are not to be regarded as a departure from the scope of the present disclosure and appended claims, and all such modifications are intended to be included within the scope of the present disclosure and appended claims.

The cardinals and the figures used for the amount mentioned above are for the purpose of illustration only and are not limiting the present disclosure. The connection and the relationship between the elements are also for the purpose of describing the technologies of the present disclosure and not limiting those realizing the function of the present disclosure.

The division of the blocks in the block charts are examples and it is allowed to realize multiple blocks by a single block or a single block by multiple blocks, and/or part of the functions can be transferred to another block. Analogous function among multiple blocks can be processed by a single hardware

**Claims**

1. A device (1) for applying at least a first energy to a substrate, comprising:

   a conversion material application unit (11) configured to apply a conversion material for converting a second energy to the first energy to the substrate; and
   an energy application unit (13) configured to apply the second energy to the conversion material applied to the substrate,
   wherein the second energy corresponds to an amount of heat not less than heat of evaporation of the conversion material.

2. The device (1) according to claim 1, wherein the first energy includes heat energy and the second energy includes light energy.

3. The device (1) according to claim 1 or 2, wherein the energy application unit (13) includes a laser light source (131) for emitting laser beams, wherein the second energy includes light energy of the laser beams.

4. The device (1) according to any one of claims 1 to 3, wherein the energy application unit (13) includes:

   a laser light source (131) configured to emit laser beams; and
   a light scanning unit (133) configured to scan the laser beams,
   wherein the energy application unit (13) is configured to emit the laser beams scanned by the light scanning unit (133) to the substrate.

5. The device (1) according to claim 3 or 4, wherein the energy application unit (13) applies the laser beams having a pulse width of 200 micro seconds or less to the substrate.

**6.** The device (1) according to any one of claims 3 to 5, wherein the energy application unit (13) applies the laser beams to both of a region of the substrate where the conversion material application unit (11) has applied the conversion material to add the second energy to the conversion material and a region of the substrate where the conversion material application unit has not applied the conversion material, wherein the first energy converted from the second energy by the conversion material surpasses a particular modification threshold in the region of the substrate where the conversion material application unit has applied the conversion material and is the particular modification threshold or less in the region of the substrate where the conversion material application unit has not applied the conversion material.

**7.** The device (1) according to any one of claims 1 to 6, wherein the conversion material application unit (11) includes a discharging unit (111) configured to discharge the conversion material and applies the conversion material discharged from the discharging unit (111) to the substrate.

**8.** The device (1) according to claim 7, wherein the discharging unit (111) includes multiple nozzles (112) configured to discharge the conversion material, wherein the substrate has a bent form, wherein the multiple nozzles (112) are disposed following the bent form.

**9.** A device (21) for applying at least a first energy to a substrate, comprising:

a conversion material application unit (211) configured to apply a conversion material for converting a second energy to the first energy to the substrate; and an energy application unit (213) configured to apply the second energy to the conversion material applied to the substrate while the conversion material is liquid.

**10.** The device (21) according to claim 9, further comprising a laser light source (2131) for application, the laser light source (2131) for application configured to emit laser beams having a wavelength of from 700 to 1,500 nm, wherein the conversion material has an absorption ratio of 50 percent or more to the laser beams having a wavelength of from 700 to 1,500 nm.

**11.** The device (21) according to claim 9 or 10, wherein the conversion material application unit (211) includes a laser light source (2111) for jetting configured to emit laser beams for jetting, wherein the laser light source (2111) for jetting is configured to emit the laser beams for jetting to the conversion material to partially jet the conversion material to apply the conversion material to the substrate.

**12.** The device (21) according to claim 9, wherein the energy application unit (213) includes:

a laser light source (2131) for application configured to emit laser beams for application; and a circulation unit (214) configured to circulate the conversion material to supply the conversion material to the conversion material application unit (211), the circulation unit (214) including:

a flow passage (2142) where the conversion material flows; and a circulation driving unit (2141) configured to at least send or suck the conversion material,

wherein the flow passage (2142) includes an opening (2144) configured to let the laser beams for application pass through, wherein the laser light source (2131) for application emits the laser beams for application through the opening (2144) to the conversion material applied to the substrate by the conversion material application unit (211).

**13.** The device (21) according to any one of claims 9 to 12, further comprising a removing unit (20) configured to supply at least one of liquid, gas, or light to the substrate to remove the conversion material remaining on the substrate after the second energy is applied while the conversion material is liquid.

# FIG. 1

FIG. 2

FIG. 3

FIG. 4

EP 3 928 993 A1

# FIG. 5

| CONTROL UNIT | | | |
|---|---|---|---|
| 141 DISCHARGING CONTROL UNIT | | 111 INK DISCHARGING HEAD | |
| 142 CONVEYANCE CONTROL UNIT | | 121 TRANSLATION STAGE | |
| 143 SCANNING CONTROL UNIT | | 133 GALVANO MIRROR | |
| 144 APPLICATION CONTROL UNIT | | 131 FIBER LASER | |

# FIG. 6A

# FIG. 6B

# FIG. 7

```
                    ┌──────────┐
                    │  START   │
                    └──────────┘
                         │
                         ▼              S71
   ┌─────────────────────────────────────────────┐
   │     START EMISSION OF PULSE LASER BEAMS      │
   └─────────────────────────────────────────────┘
                         │
                         ▼              S72
   ┌─────────────────────────────────────────────┐
   │     START SCANNING OF PULSE LASER BEAMS      │
   └─────────────────────────────────────────────┘
                         │
                         ▼              S73
   ┌─────────────────────────────────────────────┐
   │                DISCHARGE INK                 │
   └─────────────────────────────────────────────┘
                         │
                         ▼              S74
   ┌─────────────────────────────────────────────┐
   │              CONVEY CONTAINER                │
   └─────────────────────────────────────────────┘
                         │
                         ▼              S75
   ┌─────────────────────────────────────────────┐
   │            EMIT PULSE LASER BEAMS            │
   └─────────────────────────────────────────────┘
                         │
                         ▼              S76
          NO      ◇───────────────────◇
        ┌─────────       END?
        │         ◇───────────────────◇
        │                │ YES
        │                ▼
        │           ┌──────────┐
        │           │   END    │
        │           └──────────┘
```

# FIG. 8

FIG. 9

FIG. 10

# FIG. 11

# FIG. 12

IMAGE FORMING DEVICE /21

IMAGE FORMING UNIT /210

INK APPLICATION UNIT /211

CIRCULATION UNIT /214

REMOVING UNIT /220

CONVEYANCE UNIT /212

CONTROL UNIT /215

COLLECTION UNIT /230

IRRADIATOR /213

LABELLESS /231

/23

/23

EP 3 928 993 A1

# FIG. 13

<u>21</u>

# FIG. 14A

# FIG. 14B

EP 3 928 993 A1

# FIG. 15

| CONTROL UNIT 215 | |
|---|---|
| JETTING CONTROL UNIT 2151 | FIBER LASER FOR JETTING 2111 |
| CONVEYANCE CONTROL UNIT 2152 | LIFTING STAGE 2121 |
| APPLICATION CONTROL UNIT 2153 | FIBER LASER FOR APPLICATION 2131 |

# FIG. 16A

# FIG. 16B

EP 3 928 993 A1

# FIG. 17

2143

22a

2130

2131

2131a

Z

Y

X

# FIG. 18

220

220a

220b

23

221

221

27

270

# FIG. 19

# FIG. 20

# FIG. 21A

# FIG. 21B

EP 3 928 993 A1

Europäisches
Patentamt

European
Patent Office

Office européen
des brevets

# EUROPEAN SEARCH REPORT

**Application Number**

EP 21 18 0531

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2012 011688 A (LASER OYO GIKEN KK) 19 January 2012 (2012-01-19) * paragraphs [0001], [0012] - [0062]; claims 1-6; figure 1 * | 1-13 | INV. B41J2/475 B41J3/407 |
| X | JP 2013 065671 A (RICOH COMPANY LIMITED) 11 April 2013 (2013-04-11) * paragraphs [0001] - [0005], [0008], [0009], [0026], [0033], [0034] - [0038], [0057]; claims 1-10; figures 7, 8 * | 1-13 | ADD. B41J2/44 B41J2/447 B41J2/45 B41J2/47 |
| X,D | JP 2008 155232 A (SEIKO EPSON CORP; UNIV OSAKA; NALUX CO LTD) 10 July 2008 (2008-07-10) * paragraphs [0001], [0009] - [0021], [0027] - [0030], [0034]; claims 1-8; figures 1, 3 * | 1-13 | |

**TECHNICAL FIELDS SEARCHED (IPC)**

B41J
B41M
B23K

The present search report has been drawn up for all claims

| Place of search | Date of completion of the search | Examiner |
|---|---|---|
| The Hague | 14 October 2021 | Bacon, Alan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 ..........................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 18 0531

This annex lists the patent family members relating to the patent documents cited in  the above-mentioned European search report.
The members are as contained in the European Patent Office EDP file on
The European Patent Office is in no way liable for these particulars which are merely given for the purpose of information.

14-10-2021

| Patent document cited in search report | | Publication date | Patent family member(s) | | Publication date |
|---|---|---|---|---|---|
| JP 2012011688 | A | 19-01-2012 | NONE | | |
| JP 2013065671 | A | 11-04-2013 | JP | 5988128 B2 | 07-09-2016 |
| | | | JP | 2013065671 A | 11-04-2013 |
| JP 2008155232 | A | 10-07-2008 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008155232 A

- US 006025110 A